# EUROPÄISCHE PATENTSCHRIFT

(11) **EP 1 905 125 B1**
(45) Veröffentlichungstag und Bekanntmachung des Hinweises auf die Patenterteilung: **30.09.2009**
(21) Anmeldenummer: 06762530.1
(22) Anmeldetag: 11.07.2006
(51) Int. Cl.: H01Q 9/28, H01Q 9/16

(54) **THZ-SENDER UND THZ-EMPFÄNGER**
THZ-TRANSMITTER AND THZ-RECEIVER
EMETTEUR THZ ET RECEPTEUR THZ

(30) Priorität: 12.07.2005 DE 102005032900
(43) Veröffentlichungstag der Anmeldung: 02.04.2008
(73) Patentinhaber: Technische Universität Braunschweig, 38106 Braunschweig (DE)
(72) Erfinder: ENDERS, Achim, 38106 Braunschweig (DE); KOCH, Martin, 38106 Braunschweig (DE); JÖRDENS, Christian, 38120 Braunschweig (DE)
(74) Vertreter: Bongards, Jochen
(86) Internationale Anmeldenummer: PCT/EP2006/006782
(87) Internationale Veröffentlichungsnummer: WO 2007/006552

(56) Entgegenhaltungen:
- WO-A-20/04023611
- US-A1- 2004 070 548
- US-A1- 2005 024 287
- US-B1- 6 323 821
- MATSUURA S ET AL: "Generation of CW THz radiation by optical heterodyne with diode lasers and LTG-GaAs photoconductors" MICROWAVE PHOTONICS, 1996. MWP '96. TECHNICAL DIGEST., 1996 INTERNATONAL TOPICAL MEETING ON KYOTO, JAPAN 3-5 DEC. 1996, NEW YORK, NY, USA,IEEE, US, 3. Dezember 1996 (1996-12-03), Seiten 13-16, XP010270549 ISBN: 0-7803-3129-X
- BROWN E ET AL: "Room temperature, THz photomixing sweep oscillator and its application to spectroscopic transmission through organic materials" REVIEW OF SCIENTIFIC INSTRUMENTS, AMERICAN INSTITUTE OF PHYSICS, US, Bd. 75, Nr. 12, 30. November 2004 (2004-11-30), Seiten 5333-5342, XP012071969 ISSN: 0034-6748

## Beschreibung

Die vorliegende Erfindung betrifft einen Sender zum Erzeugen und Abstrahlen eines elektromagnetischen Impulses mit Anteilen in einem Höchstfrequenzbereich von 50 GHz bis 30 THz, mit
einer als Antenne wirkenden ersten Leitungsstruktur, die einen Fußpunkt aufweist, an dem zwei Kontakte angeordnet sind, wobei die als Antenne wirkende erste Leitungsstruktur eine Bow-Tie-Leitungsstruktur oder eine λ/2- oder λ-Dipolstruktur ist, wobei λ die einer gewünschten Frequenz im Höchstfrequenzbereich zugeordnete Wellenlänge ist,
einem Halbleiterbereich zwischen den beiden Kontakten des Fußpunktes, wobei der Halbleiterbereich ein photoleitendes Halbleitermaterial enthält,
einer Lichtquelle, die derart angeordnet und ausgebildet ist, daß Lichtimpulse auf den Halbleiterbereich gestrahlt werden können, und
einer Einrichtung zum Erzeugen einer ein elektrisches Feld in dem Halbleitermaterial bewirkenden Potentialdifferenz zwischen den beiden Kontakten des Fußpunktes.

Ferner betrifft die vorliegende Erfindung einen Empfänger zum Empfangen eines elektromagnetischen Impulses mit Anteilen in einem Höchstfrequenzbereich von 50 GHz bis 30 THz mit den Merkmalen des Oberbegriffs des Anspruchs 22.

Gattungsgemäße THz-Sender und THz-Empfänger sind aus dem Artikel von Zhang, J. u. a. "Terahertz pulse generation and detection with LT-GaAs photoconductive antenna" in IEE Proc.-Optoelectron. 2004, Vol. 151, No. 2, S. 98 - 101 sowie aus dem Artikel von Matsuura S..u.a. "Generation of cw THz radiation by optical heterodyne with diode lasers and LTG-GaAs photoconductors", MICROWAVE PHOTONICS, 1996. MWP '96. TECHNICAL DIGEST., 1996 INTERNATIONAL TOPICAL MEETING ON KYOTO, JAPAN 3-5 DEC. 1996, NEW YORK, NY, USA, IEEE, US, 3. Dezember 1996 (1996-12-03), Seiten 13-16, XP010270549 ISBN:0-7803-3129-X bekannt.

Elektromagnetische Strahlung im Frequenzbereich von 50 GHz bis 30 THz, der auch als THz-Frequenzbereich bezeichnet wird, ist in den letzten 10 Jahren zu einem bedeutsamen Forschungsgebiet geworden. Ein mögliches Anwendungsgebiet für Sender bzw. Empfänger im THz-Frequenzbereich sind z. B. kurzreichweitige drahtlose Indoor-Kommunikationssysteme. Solche Kommunikationssysteme könnten eine Alternative zu den heutigen Übertragungsstandards wie Blue Tooth oder der Infrarot-Schnittstelle werden. Vorteilhaft ist hierbei die höhere zur Verfügung stehende Übertragungsbandbreite aufgrund der höheren Trägerfrequenz. Außerdem kann elektromagnetische Strahlung im THz-Bereich zum sogenannten THz-Imaging verwendet werden, bei welchem Proben mit THz-Strahlen bestrahlt werden. Da viele Materialien Strahlung im THz-Bereich absorbieren, können Bilder erstellt werden, die beispielsweise in der Medizin oder in der Materialprüfung verwendbar sind.

Derzeit verwendeten THz-Sendern bzw. -Empfängern liegt das im folgenden beschriebene Funktionsprinzip zugrunde. Wird der Halbleiterbereich des Senders mit einem kurzen Lichtimpuls üblicherweise im Wellenlängenbereich von 2 µm bis 30 mm bestrahlt, werden in dem Halbleiter Elektron-Loch-Paare und somit frei Ladungsträger erzeugt. Dadurch wird die Leitfähigkeit des Halbleiters deutlich erhöht. Sofern ein elektrisches Feld an dem Halbleiterbereich anliegt, werden die erzeugten freien Ladungsträger beschleunigt und ihr Strom koppelt in die als Antenne wirkende benachbarte Leitungsstruktur ein. Nach Maxwell wird elektromagnetische Strahlung abgestrahlt. Sofern die Anstiegszeit des Lichtimpulses kürzer als eine Pikosekunde ist, wird ein breitbandiger elektromagnetischer Impuls mit Anteilen in dem Höchstfrequenzbereich bzw. dem THz-Bereich erzeugt.

Der Nachweis der THz-Impulse erfolgt mit einem im wesentlichen gleich aufgebauten Empfänger, der lediglich statt einer Einrichtung zur Erzeugung einer Potentialdifferenz eine Einrichtung zum Erfassen einer Potentialdifferenz aufweist. In dessen Halbleiterbereich werden durch Lichtimpulse ebenfalls freie Ladungsträger erzeugt. Das elektrische Feld des empfangenen THz-Impulses beschleunigt die freien Ladungsträger in der als Antenne wirkenden Leitungsstruktur, so daß im Empfänger ein Strom proportional zur elektrischen Feldstärke des THz-Impulses gemessen werden kann.

Als Halbleitermaterial kann beispielsweise GaAs verwendet werden. Bei den bekannten Sendern bzw. Empfängern ist einer der beiden Kontakte des Fußpunktes mit einem Abschnitt der ersten Leitungsstruktur gekoppelt und der zweite Kontakt entweder mit einem zweiten Abschnitt der ersten Leitungsstruktur oder mit der Einrichtung zum Erzeugen einer ein elektrisches Feld in dem Halbleitermaterial bewirkenden Potentialdifferenz zwischen den beiden Kontakten des Fußpunktes.

Als Lichtquelle dient üblicherweise ein Femtosekundenlaser. Es genügt dabei, wenn die Lichtimpulse auf einen Teilbereich des Halbleiterbereichs gestrahlt werden. Es ist nicht erforderlich, daß der gesamte Halbleiterbereich zwischen den beiden Kontakten des Fußpunktes mit den Lichtimpulsen bestrahlt wird. In der Regel wird eine Fläche von 5 bis 200 µm², üblicherweise 25 µm², zwischen den beiden Kontakten des Fußpunktes mit den Lichtimpulsen bestrahlt.

Die Leitungsstrukturen sind oft λ/2 bzw. λ-Dipolstrukturen. Alternativ können Bow-Tie-Leitungsstrukturen verwendet werden. Für die Potentialdifferenz kann sowohl eine Gleichspannung als auch eine niederfrequente Wechselspannung angelegt werden.

Allerdings haben alle bekannten THz-Sender bzw. -Empfänger den Nachteil, daß die mit ihnen abgestrahlte Leistung bzw. die mit ihnen empfangene Leistung sehr gering ist. Der Grund hierfür ist, daß der Innenwiderstand des als Quelle dienenden Halbleiters relativ hoch ist. Die Leitfähigkeit des Halbleiters kann jedoch nicht erhöht werden, da dann auch der Dunkelstrom erhöht würde und damit der Signal-Zu-Rauschabstand bei der Detektion sinken würde. Auch kann bei dem Sender die Potentialdifferenz zwischen den beiden Kontakten des Fußpunktes nicht beliebig erhöht werden, da die Spannung unterhalb der Durchbruchspannung des Halbleiters liegen muß. Eine industrielle Nutzung der THz-Strahlung ist bisher aufgrund der geringen Leistung der THz-Sender kaum möglich.

Aufgabe der Erfindung ist es daher, einen THz-Sender mit Bow-Tie-Leitungsstruktur oder λ/2- bzw. λ-Dipolstruktur zur Verfügung zu stellen, mit dem die abgestrahlte Leistung einfach und kostengünstig erhöht werden kann. Ferner ist es eine Aufgabe der Erfindung, einen THz-Empfänger zur Verfügung zu stellen, mit dem die Empfangsleistung erhöht werden kann.

Diese Aufgabe wird erfindungsgemäß gelöst durch einen Sender mit den Merkmalen des Oberbegriffs des Anspruchs 1, der dadurch gekennzeichnet ist, daß wenigstens eine zweite Leitungsstruktur vorgesehen ist, die mit Abstand zum Fußpunkt angeordnet ist und derart ausgebildet und mit der ersten Leitungsstruktur gekoppelt ist, daß am Fußpunkt der wirksame Strahlungswiderstand für wenigstens diejenige Frequenz in dem Höchstfrequenzbereich erhöht wird, bei der die maximale Abstrahlleistung erzielt wird, und daß
die wenigstens eine zweite Leitungsstruktur eine Bow-Tie-Leitungsstruktur oder eine λ/2- oder λ-Dipolstruktur ist.

Überraschenderweise hat sich gezeigt, daß durch die Verwendung zusätzlicher Leitungsstrukturen, in dieser Beschreibung zweite Leitungsstrukturen genannt, zu den bekannten Leitungsstrukturen, in dieser Beschreibung erste Leitungsstrukturen genannt, die abgestrahlte Leistung erheblich erhöht werden kann, nämlich um wenigstens 5 dB, unter idealen Bedingungen um bis zu 30 dB.

In der klassischen Hochfrequenz-Antennentechnik ist es nämlich genau umgekehrt: Die Abstrahlleistung wird dadurch erhöht, daß am Fußpunkt einer als Antenne wirkenden Leitungsstruktur der wirksame Strahlungswiderstand erniedrigt wird.

Der Erfindung liegt die Erkenntnis zugrunde, daß bei THz-Sendern eine bessere Anpassung zwischen Quelle und als Antenne wirkender Leitungsstruktur realisiert werden kann, wenn am Fußpunkt der wirksame Strahlungswiderstand erhöht wird und dadurch die Differenz zwischen dem hohen Quellwiderstand des Halbleiters und dem Strahlungswiderstand verringert wird. Durch die erfindungsgemäß erzielte Leistungssteigerung bei THz-Sendern wird die industrielle Nutzung von THz-Strahlung möglich.

Die wenigstens eine zweite Leitungsstruktur kann elektrisch leitend, kapazitiv oder induktiv mit der ersten Leitungsstruktur gekoppelt sein. Auch wenn in der folgenden Beschreibung teilweise nur der Begriff "leitend" verwendet wird, ist hierunter stets "elektrisch leitend" zu verstehen.

Eine besonders bevorzugte Ausführungsform der Erfindung ist dadurch gekennzeichnet, daß die wenigstens eine zweite Leitungsstruktur derart ausgebildet und mit der ersten Leitungsstruktur gekoppelt ist, daß am Fußpunkt der wirksame Strahlungswiderstand für wenigstens diejenige Frequenz in dem Höchstfrequenzbereich auf mehr als 300 Q, vorzugsweise mehr als 600 Ω erhöht wird, bei der die maximale Abstrahlleistung erzielt wird. Da der Quellwiderstand des Halbleiterbereichs je nach Halbleitermaterial in der Regel zwischen 5 und 20 kΩ liegt, kann mit entsprechend hohen Werten des wirksamen Strahlungswiderstands ein besonders leistungsfähiger THz-Sender zur Verfügung gestellt werden.

Aus Gründen der Prozessökonomie ist es vorteilhaft, wenn die erste und die wenigstens eine zweite Leitungsstruktur auf einer durchgehenden Halbleiterschicht aufgebracht sind, die zwischen den Kontakten des Fußpunktes den Halbleiterbereich bildet. Als Halbleitermaterial kann beispielsweise GaAs verwendet werden. Die GaAs-Halbleiterschicht kann auf einem temperaturbeständigen Substrat aufgebracht werden, das die THz-Strahlung nicht absorbiert, z. B. Saphir.

Alternativ können die erste und die wenigstens eine zweite Leitungsstruktur auf einem Substrat aufgebracht sein, in das zwischen den beiden Kontakten des Fußpunktes der Halbleiterbereich integriert ist oder auf welches eine Halbleiterregion aufgebracht wird. Wenn der Halbleiterbereich auf die Fläche zwischen den beiden Kontakten des Fußpunktes beschränkt wird, kann der Dunkelstrom verringert werden und somit der Signal-zu-Rauschabstand bei der Detektion erhöht werden. Allerdings ist es wichtig, daß die beiden Kontakte des Fußpunktes jeweils mit dem Halbleitermaterial leitend verbunden sind und zwischen den beiden Kontakten des Fußpunktes eine durchgehende Verbindung von dem Halbleitermaterial geschaffen wird.

Eine Weiterbildung der Erfindung ist dadurch gekennzeichnet, daß die erste und die wenigstens eine zweite Leitungsstruktur strukturierte Leiterschichten sind, die auf der durchgehenden Halbleiterschicht oder dem Substrat aufgebracht sind.

Vorzugsweise bestehen die erste und die wenigstens eine zweite Leitungsstruktur aus Metall, z. B. aus Gold.

Gute Abstrahlleistungen im Höchstfrequenzbereich von 50 GHz bis 30 THz können dadurch erzielt werden, daß die erste und die wenigstens eine zweite Leitungsstruktur eine längliche Form aufweisen und ihre Länge kleiner als 3 mm, vorzugsweise kleiner als 1 mm ist. Wichtig ist, daß die Länge der ersten und der wenigstens einen zweiten Leitungsstruktur nicht wesentlich größer als die Wellenlänge einer gewünschten Abstrahlfrequenz im Höchstfrequenzbereich ist. D. h. die Länge der ersten und zweiten Leitungsstruktur sollte möglichst nicht größer als λ ± λ/3 sein.

Eine Weiterbildung der Erfindung ist dadurch gekennzeichnet, daß die erste Leitungsstruktur zwei Abschnitte aufweist, die sich vom Fußpunkt aus in zwei unterschiedlichen, vorzugsweise in entgegengesetzten Richtungen erstrecken. Bei der ersten Leitungsstruktur kann es sich beispielsweise um eine Bow-Tie-Antenne handeln.

Zur Erzielung einer hohen Abstrahlleistung ist es vorteilhaft, wenn die erste Leitungsstruktur eine Resonanzstruktur ist, die durch Veränderung ihrer Länge abgestimmt wird.

Eine bevorzugte Ausführungsform ist dadurch gekennzeichnet, daß die erste Leitungsstruktur eine weniger als λ/8 breite Lücke aufweist, die die erste Leitungsstruktur in zwei in axialer Richtung hintereinander liegende Abschnitte unterteilt, und den Fußpunkt bildet, wobei jedem der beiden Abschnitte jeweils einer der beiden Kontakte zugeordnet ist und wobei λ die einer gewünschten Frequenz im Höchstfrequenzbereich zugeordnete Wellenlänge ist. Es hat sich gezeigt, daß bei einer entsprechend kleinen Lücke eine bessere Abstrahlleistung als bei größeren Lücken erzielt werden kann, da das Abstrahlverhalten der als Antenne wirkenden ersten Leitungsstruktur durch eine solche kleine Lücke am wenigsten beeinträchtigt wird.

Da symmetrische Anordnungen besonders gut abstrahlen, ist es vorteilhaft, wenn die Lücke in der Mitte der ersten Leitungsstruktur angeordnet ist.

Ein verfahrenstechnisch besonders einfach herstellbarer Sender ist dadurch gekennzeichnet, daß sich die Form der wenigstens einen zweiten Leitungsstruktur nur durch den fehlenden Fußpunkt von der Form der ersten Leitungsstruktur unterscheidet, daß die erste und die wenigstens eine zweite Leitungsstruktur nebeneinander angeordnet sind und daß die axialen Richtungen benachbarter Leitungsstrukturen einen Winkel kleiner 70° einschließen, vorzugsweise parallel sind. Auch bei dieser Ausführungsform kann die Form der ersten Leitungsstruktur beliebig gewählt werden. Außer λ/2 - oder λ-Dipolstrukturen sind Bow-Tie-Antennen, Spiralantennen oder dergleichen möglich.

Eine Weiterbildung der Erfindung ist dadurch gekennzeichnet, daß die axialen Abstände zwischen unmittelbar benachbarten Leitungsstrukturen jeweils kleiner als 0,5 mm, vorzugsweise kleiner als 0,1 mm sind. Unter dem axialen Abstand zwischen unmittelbar benachbarten Leitungsstrukturen ist hierbei der Abstand der Längsachsen der benachbarten Leitungsstrukturen zu verstehen. Sofern eine Längsachse einer bestimmten Leitungsstruktur nicht eindeutig bestimmbar ist, ist hier unter der Längsachse einer Leitungsstruktur die zur bevorzugten Abstrahlrichtung senkrecht verlaufende Achse zu verstehen. Die axialen Abstände sollten entsprechend klein sein, vorzugsweise kleiner als λ/8, damit alle Leitungsstrukturen noch einen maximalen Einfluß auf den abgestrahlten Impuls haben und die Gesamtanordnung aus ersten und zweiten Leitungsstrukturen zum Strahlungswiderstand beiträgt. Sofern die Leitungsstrukturen zu weit auseinander liegen, sieht die Quelle im ungünstigsten Fall nur die erste Leitungsstruktur. Dadurch könnte die abgestrahlte Leistung nicht wie gewünscht erhöht werden.

Eine besonders bevorzugte Ausführungsform des erfindungsgemäßen Senders ist dadurch gekennzeichnet, daß auf der einen Seite der ersten Leitungsstruktur n zweite Leitungsstrukturen und auf der anderen Seite der ersten Leitungsstruktur m zweite Leitungsstrukturen angeordnet sind, wobei wenigstens einer der Werte n und m größer gleich 1 ist,
daß die zur ersten Leitungsstruktur unmittelbar benachbarten zweiten Leitungsstrukturen an ihren beiden Enden jeweils mit dem entsprechenden Ende der ersten Leitungsstruktur gekoppelt sind und
daß die anderen zweiten Leitungsstrukturen an ihren beiden Enden jeweils mit dem entsprechenden Ende der in Richtung der ersten Leitungsstruktur unmittelbar benachbarten zweiten Leitungsstruktur gekoppelt sind.

Bei der einfachsten Ausführungsform ist lediglich eine einzige zweite Leitungsstruktur auf einer Seite der ersten Leitungsstruktur angeordnet, wobei die beiden Enden der zweiten Leitungsstruktur mit den entsprechenden beiden Enden der ersten Leitungsstruktur gekoppelt sind. Bei den ersten und zweiten Leitungsstrukturen handelt es sich vorzugsweise wiederum um λ- bzw. λ/2-Dipolstrukturen, wobei die erste Leitungsstruktur vorzugsweise in der Mitte eine weniger als λ/8 breite Lücke aufweist. Diese Lücke bildet den Fußpunkt der ersten Leitungsstruktur. Da die zweiten Leitungsstrukturen und die erste Leitungsstruktur bei dieser Ausführungsform eine oder mehrere geschlossene Schleifen bilden, sind die beiden Kontakte des Fußpunktes auch ohne Lichtimpuls leitend direkt gekoppelt, nämlich über die wenigstens eine zweite Leitungsstruktur. Daher kann die Potentialdifferenz zwischen den beiden Kontakten des Fußpunktes nicht durch eine direkte Kontaktierung erzeugt werden, da sich sonst ein Kurzschluß ergeben würde. Statt dessen können z. B. mit einem ggf. zusätzlich vorgesehenen Laser laserinduzierte Ströme in dem Halbleiterbereich oder in den Leitungsstrukturen induziert werden, welche die erforderliche Potentialdifferenz zwischen den beiden Kontakten des Fußpunktes bewirken.

Die Anzahl der Schleifen ist beliebig, wobei jede zusätzliche Schleife den Strahlungswiderstand am Fußpunkt der Gesamtanordnung weiter erhöht und somit zu einer besseren Anpassung zwischen Quelle und Sender führt. Die abgestrahlte Leistung wird entsprechend erhöht.

Die für die industrielle Anwendung wahrscheinlich interessante Ausführungsform des erfindungsgemäßen Senders ist dadurch gekennzeichnet, daß auf der einen Seite der ersten Leitungsstruktur n zweite Leitungsstrukturen und auf der anderen Seite der ersten Leitungsstruktur m zweite Leitungsstrukturen angeordnet sind, wobei wenigstens einer der Werte n und m größer gleich 1 ist,
daß das eine Ende der ersten Leitungsstruktur mit dem entsprechenden Ende der auf der einen Seite der ersten Leitungsstruktur unmittelbar benachbarten zweiten Leitungsstruktur gekoppelt ist,
daß das andere Ende der ersten Leitungsstruktur mit dem entsprechenden Ende der auf der anderen Seite der ersten Leitungsstruktur unmittelbar benachbarten zweiten Leitungsstruktur gekoppelt ist,
daß jeweils das nicht mit der ersten Leitungsstruktur gekoppelte Ende der der ersten Leitungsstruktur unmittelbar benachbarten zweiten Leitungsstruktur ein offenes Leitungsende bildet oder, wenn auf der der ersten Leitungsstruktur entgegengesetzten Seite der zweiten Leitungsstruktur eine weitere zweite Leitungsstruktur angeordnet ist, daß das nicht mit der ersten Leitungsstruktur gekoppelte Ende der der ersten Leitungsstruktur unmittelbar benachbarten zweiten Leitungsstruktur mit dem entsprechenden Ende dieser weiteren zweiten Leitungsstruktur gekoppelt ist, und
daß auf beiden Seiten der ersten Leitungsstruktur die äußersten zweiten Leitungsstrukturen jeweils mit ihrem einen Ende mit dem entsprechenden Ende der in Richtung der ersten Leitungsstruktur unmittelbar benachbarten zweiten Leitungsstruktur gekoppelt sind und daß ihr anderes Ende jeweils ein offenes Leitungsende bildet, und daß
sofern zwischen den äußersten zweiten Leitungsstrukturen und den der ersten Leitungsstruktur unmittelbar benachbarten zweiten Leitungsstrukturen weitere zweite Leitungsstrukturen angeordnet sind, diese jeweils mit ihrem einen Ende mit dem entsprechenden Ende der auf der einen Seite unmittelbar benachbarten zweiten Leitungsstruktur gekoppelt sind und mit ihrem anderen Ende mit dem entsprechenden Ende der auf ihrer anderen Seite unmittelbar benachbarten zweiten Leitungsstruktur gekoppelt sind.

Bei dieser Ausführungsform sind die ersten und zweiten Leitungsstrukturen jeweils nur an einem Ende verbunden und liegen somit in Zickzackform oder als offene Schleifen vor. Da die beiden Kontakte des Fußpunktes über die wenigstens eine zweite Leitungsanordnung nicht leitend verbunden sind, ist eine direkte Kontaktierung der Leitungsstrukturen zur Erzeugung der Potentialdifferenz zwischen den beiden Kontakten des Fußpunktes möglich, z. B. mit Hilfe einer geeigneten Spannungsversorgung. Auch hier ist die Anzahl der zweiten Leitungsstrukturen beliebig und die Effizienz des Senders kann durch eine möglichst hohe Anzahl von zweiten Leitungsstrukturen verbessert werden.

Bei dieser und der zuvor beschriebenen Ausführungsform können die einzelnen Leitungsstrukturen jeweils leitend, kapazitiv oder induktiv gekoppelt sein. Vorzugsweise sind alle Leitungsstrukturen gleich gekoppelt, d. h. entweder leitend oder kapazitiv oder induktiv.

Eine aufgrund ihrer Symmetrie besonders einfache Ausführungsform des Senders ist dadurch gekennzeichnet, daß m und n gleich sind.

Eine Weiterbildung der Erfindung ist dadurch gekennzeichnet, daß benachbarte erste und/oder zweite Leitungsstrukturen über Leitungsverbindungsabschnitte gekoppelt sind.

Damit diese Leitungsverbindungsabschnitte selbst möglichst wenig strahlen bzw. die Abstrahlcharakteristik beeinflussen, sind sie vorteilhafterweise kürzer als λ/8, vorzugsweise kürzer als λ/10, wobei λ die einer gewünschten Frequenz im Höchstfrequenzbereich zugeordnete Wellenlänge ist.

Die Abstrahlung der Leitungsverbindungsabschnitte kann dadurch weiter reduziert werden, daß die ersten und zweiten Leitungsstrukturen parallel verlaufen und die Leitungsverbindungsabschnitte zu diesen senkrecht angeordnet sind.

Eine Weiterbildung der Erfindung ist dadurch gekennzeichnet, daß die eine Potentialdifferenz erzeugende Einrichtung eine Spannungsquelle ist, und zwar entweder eine Gleichspannungsquelle oder eine Spannungsquelle für niederfrequente Wechselspannungen.

Es hat sich bewährt, daß als Lichtquelle ein Laser vorgesehen ist, der Lichtimpulse einer Dauer kleiner als 5 Pikosekunden, vorzugsweise kleiner als 1 Pikosekunde, erzeugen kann. Je kürzer die Lichtimpulse oder wenigstens ihre Anstiegsflanken sind, desto breitbandiger sind die mit dem erfindungsgemäßen Sender abgestrahlten elektromagnetischen Impulse, wobei besonders hohe Abstrahlleistungen im Höchstfrequenzbereich erzielt werden können.

Die erfindungsgemäße Aufgabe wird außerdem gelöst durch einen Empfänger zum Empfangen eines elektromagnetischen Impulses mit Anteilen in einem Höchstfrequenzbereich von 50 GHz bis 30 THz mit den Merkmalen des Oberbegriffs des Anspruchs 22, der dadurch gekennzeichnet ist, daß wenigstens eine zweite Leitungsstruktur vorgesehen ist, die mit Abstand zum Fußpunkt angeordnet ist und derart ausgebildet und mit der ersten Leitungsstruktur gekoppelt ist, daß am Fußpunkt der wirksame Strahlungswiderstand für wenigstens diejenige Frequenz in dem Höchstfrequenzbereich erhöht wird, bei der die maximale Empfangsleistung erzielt wird, und daß
die wenigstens eine zweite Leitungsstruktur eine Bow-Tie-Leitungsstruktur oder eine λ/2- oder λ-Dipolstruktur ist.

Vorteilhafte Weiterbildungen des Empfängers sind den Unteransprüchen zu entnehmen, wobei diese im wesentlichen den Weiterbildungen des oben beschriebenen Senders entsprechen. Wichtig ist in allen Ausführungsformen, daß die zweiten Leitungsstrukturen keinen eigenen Fußpunkt aufweisen, sondern daß der gesamte Sender bzw. Empfänger von einem einzigen Fußpunkt gespeist wird.

Im folgenden wird die Erfindung anhand verschiedener in der Zeichnung dargestellter Ausführungsbeispiele näher erläutert. In der Zeichnung zeigen:
Figur 1 eine schematische Darstellung eines bekannten THz-Senders;
Figur 2 eine schematische Darstellung eines bekannten THz-Empfängers;
Figur 3A ein Diagramm, das den Stromverlauf in dem bekannten Sender gemäß Figur 1 darstellt;
Figur 3B ein Diagramm, das den zeitlichen Verlauf des elektrischen Feldes des THz-Impulses des bekannten Senders gemäß Figur 1 darstellt;
Figur 3C ein Diagramm, das das Frequenzspektrum eines THz-Impulses darstellt;
Figur 4 eine bekannte Anordnung zum Erzeugen und Empfangen eines THz-Impulses mit einem Sender gemäß Figur 1 und einem Empfänger gemäß Figur 2;
Figur 5 eine schematische Darstellung einer Ausführungsform des erfindungsgemäßen Senders bzw. Empfängers, wobei der die Lichtimpulse erzeugende Laser und die Spannungsquelle bzw. die Einrichtung zum Erfassen der Potentialdifferenz nicht dargestellt sind;
Figur 6 eine schematische Darstellung einer weiteren Ausführungsform des erfindungsgemäßen Senders bzw. Empfängers, wobei der die Lichtimpulse erzeugende Laser und die Spannungsquelle bzw. die Einrichtung zum Erfassen der Potentialdifferenz nicht dargestellt sind;
Figur 7 eine schematische Darstellung einer weiteren Ausführungsform des erfindungsgemäßen Senders;
Figur 8 eine schematische Darstellung einer weiteren Ausführungsform des erfindungsgemäßen Empfängers;
Figur 9 eine schematische Darstellung einer weiteren Ausführungsform des erfindungsgemäßen Senders;
Figur 10 eine schematische Darstellung einer weiteren Ausführungsform des erfindungsgemäßen Senders;
Figur 11 eine schematische Darstellung einer weiteren Ausführungsform des erfindungsgemäßen Empfängers; und
Figur 12 eine schematische Darstellung eines Senders mit einer λ/4-Dipolstruktur.

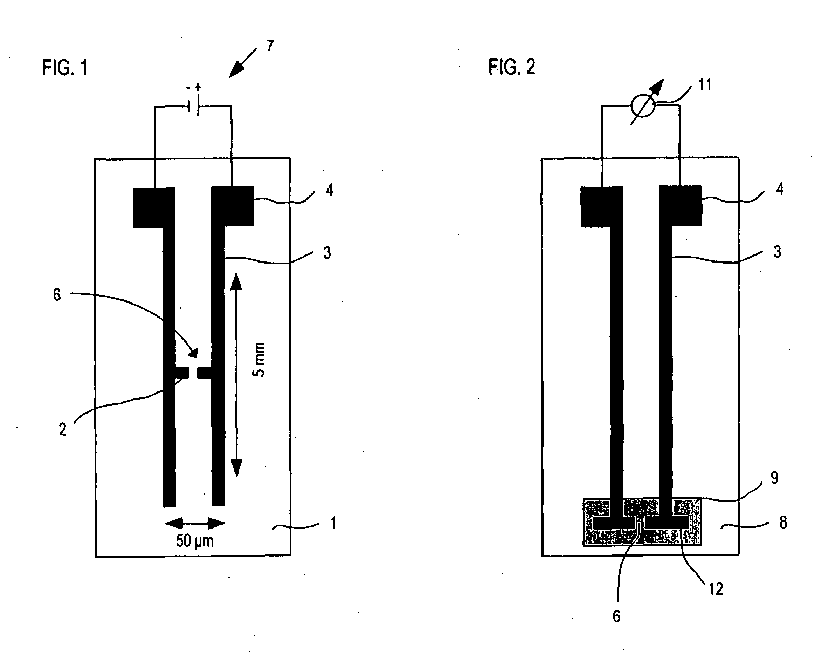

Figur 1 zeigt einen bekannten THz-Sender. Auf einer durchgehenden Halbleiterschicht 1, vorzugsweise aus GaAs, sind Leiterbahnen 2 und 3 sowie Kontaktpads 4 aus Metall aufgedampft. Die Leiterbahn 2 ist eine als Antenne wirkende λ/2-Dipolstruktur. Sie ist 50 µm lang und weist in der Mitte einen Spalt bzw. eine Lücke 6 auf, die 5 µm breit ist. An die Kontaktpads 4, die 0,5 x 0,5 mm² groß sind, ist eine Spannungsquelle 7 angeschlossen. Zur Erzeugung von THz-Strahlung wird die Lücke 6 mit einem Laserimpuls eines Femtosekundenlasers bestrahlt. Dadurch werden in dem bestrahlten Halbleiter Elektron-Loch-Paare und somit freie Ladungsträger erzeugt. Durch das von der Spannungsquelle 7 erzeugte elektrische Feld werden die in der Lükke 6 im Halbleiter erzeugten freien Ladungsträger beschleunigt und in die λ/2-Dipolstruktur 2 eingekoppelt. Der resultierende Stromfluß in der λ/2-Dipolstruktur führt zur Abstrahlung des gewünschten elektromagnetischen Impulses im THz-Frequenzbereich.

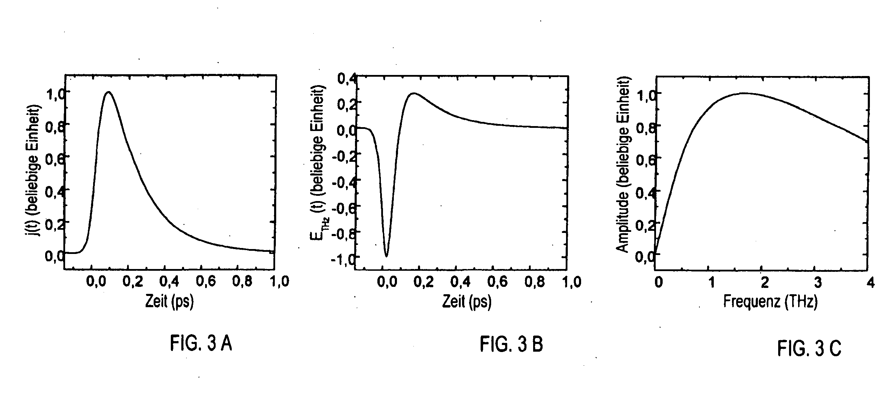

Die Figur 3A zeigt den Stromverlauf in der λ/2-Dipolstruktur gemäß Figur 1. Wenn zum Zeitpunkt Null der Laserimpuls auf die Lücke 6 auftrifft, zeigt der Strom einen steil ansteigenden Peak. Innerhalb einer Pikosekunde fällt der Strom wieder auf Null zurück, wobei die abfallende Flanke deutlich flacher als der Anstieg verläuft. Die genaue Form der abfallenden Flanke hängt von der Zahl der freien Ladungsträger, der Ladungsträgerbeweglichkeit und von der angelegten Spannung ab.

Figur 3B zeigt den zeitlichen Verlauf des elektrischen Feldes des abgestrahlten elektromagnetischen THz-Impulses und Figur 3C zeigt schließlich das zugehörige frequenzabhängige Spektrum des von dem bekannten Sender gemäß Figur 1 erzeugten THz-Impulses. Wie Figur 3C zu entnehmen ist, ist der Impuls zumindest im THz-Bereich breitbandig und deckt den Frequenzbereich von 0,05 - 4 THz ab.

In Figur 2 ist ein Empfänger gemäß dem Stand der Technik schematisch dargestellt. Dieser Empfänger weist ein Substrat 8, z. B. aus Saphir auf. Auf dem Substrat 8 ist eine Halbleiterregion 9, z. B. aus ionenimplantiertem Silizium, aufgebracht. Auf dem Substrat 8 und der Halbleiterregion 9 sind Metallleiterbahnen 3 und 12 sowie die Kontaktpads 4 aufgedampft. Die Kontaktpads 4 sind mit einem Amperemeter 11 gekoppelt. Die Leiterbahnen 12 bilden wie bei dem Sender gemäß Figur 1 eine λ/2-Dipolstruktur, welche THz-Strahlung empfangen kann. Im Gegensatz zur Figur 1 ist die λ/2-Dipolstruktur diesmal in der Mitte ihrer beiden Abschnitte mit den Enden der als Zuleitung dienenden Leiterbahnen 3 verbunden, welche einige mm, hier 5 mm, lang sind. Diese andere Anordnung der Leiterbahnen 3 und 12 ist jedoch nicht für alle Empfänger des Standes der Technik charakteristisch, sondern stellt nur eine bekannte alternative Anordnung der Leiterbahnen dar. Genauso könnte die Anordnung gemäß Figur 2 als Sender gemäß dem Stand der Technik verwendet werden, wenn statt dem Amperemeter 11 eine Spannungsquelle 7 vorgesehen würde.

Die Detektion des THz-Impulses mit Hilfe des Empfängers gemäß Figur 2 wird nun erläutert. Zu der Zeit, zu der der THz-Impuls erwartet wird, wird mit dem abgelenkten Strahl des Femtosekundenlasers die Lücke 6 zwischen den beiden Abschnitten der λ/2-Dipolstruktur 12 bestrahlt. Die dort erzeugten Elektron-Loch-Paare werden von dem elektrischen Feld des empfangenen THz-Impulses beschleunigt, wobei der resultierende Stromfluß vom Amperemeter 11 erfaßt wird. Die Detektion erfolgt somit kohärent, wobei idealisiert betrachtet der gesendete THz-Impuls abgetastet wird.

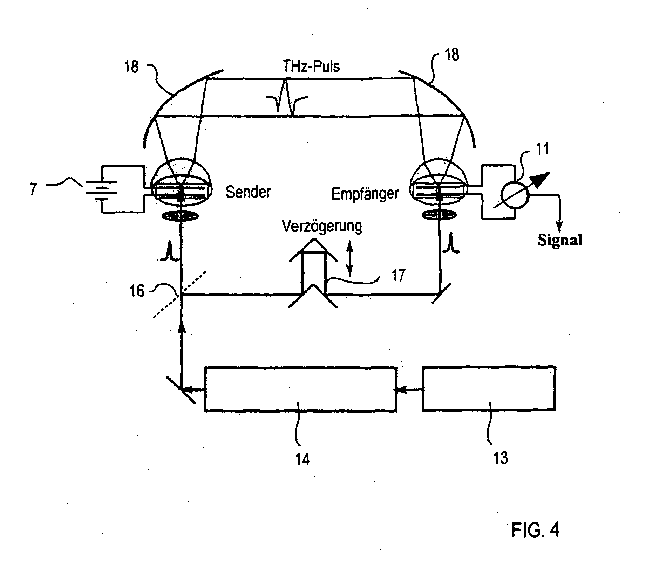

Figur 4 zeigt eine Anordnung zum Abstrahlen und Empfangen von THz-Impulsen. Diese bekannte Anordnung enthält außer dem Sender gemäß Figur 1 und dem Empfänger gemäß Figur 2 einen Pumplaser 13, der einen Femtosekundenlaser 14 optisch pumpt. Im Strahlengang hinter dem Femtosekundenlaser 14 ist ein Strahlteiler 16 angeordnet, der den Laserstrahl teilt und sowohl mit dem Sender als auch mit dem Empfänger koppelt. Der von dem Strahlteiler 16 durchgelassene Laserstrahl trifft auf den entsprechenden Halbleiterbereich im Sender, wodurch ein THz-Impuls erzeugt wird. Dieser THz-Impuls wird mit Hilfe von zwei Off-Axis-Parabolspiegeln 18, auf den Empfänger gemäß Figur 2 gelenkt. Auch der von dem Strahlteiler 16 reflektierte Laserstrahl gelangt über eine Verzögerungseinrichtung 17 zum Empfänger. Die Verzögerung in dieser Einrichtung muß so eingestellt werden, daß der Laserimpuls genau dann auf den Halbleiterberich im Empfänger trifft, wenn der THz-Impuls den Empfänger erreicht.

Allerdings ist die mit dieser bekannten Anordnung abgestrahlte Leistung äußerst gering, nämlich in der Regel weniger als 1 µW im zeitlichen Mittel.

In den folgenden Figuren sind verschiedene Ausführungsformen des erfindungsgemäßen Senders bzw. Empfängers dargestellt, mit denen wesentlich höhere abgestrahlte Leistungen, nämlich um wenigstens 5 dB höher, erzielt werden können. Je nachdem, ob an die dargestellten Leitungsstrukturen eine Einrichtung 7 zum Erzeugen einer Potentialdifferenz oder eine Einrichtung 11 zum Erfassen einer Potentialdifferenz angeschlossen wird, kann man alle dargestellten Ausführungsformen sowohl zur Realisierung eines Senders als auch eines erfindungsgemäßen Empfängers verwenden.

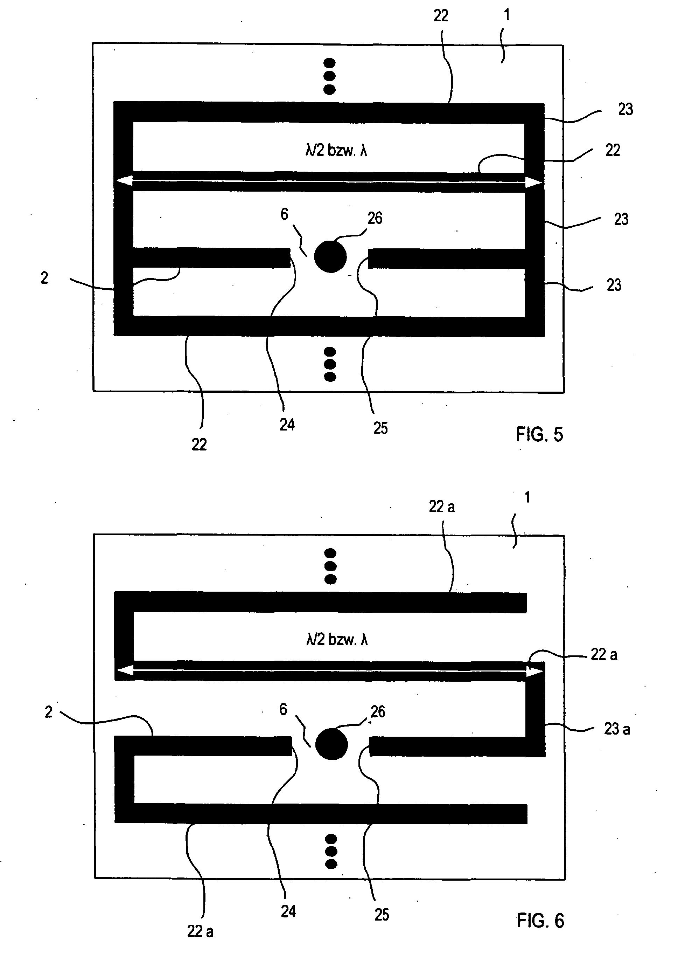

Figur 5 zeigt eine schematische Darstellung einer ersten Ausführungsform des erfindungsgemäßen THz-Senders bzw. -Empfängers.

In Figur 5 ist wie in Figur 1 auf einer durchgehenden Halbleiterschicht 1 eine strukturierte Leiterschicht aufgebracht. Diese besteht aus einer als Antenne wirkenden ersten Leitungsstruktur 2, und drei parallel dazu angeordneten zweiten Leitungsstrukturen 22. Die Anzahl der zur ersten Leitungsstruktur parallel angeordneten zweiten Leitungsstrukturen 22 kann beliebig gewählt werden, wobei jede zusätzliche Leitungsstruktur den Strahlungswiderstand weiter erhöht und damit die Anpassung weiter verbessert. Die zur ersten Leitungsstruktur 2 unmittelbar benachbarten zweiten Leitungsstrukturen 22 sind an ihren beiden Enden jeweils mit dem entsprechenden Ende der ersten Leitungsstruktur 2 gekoppelt. Die dritte zweite Leiturigsstruktur 22 ist an ihren beiden Enden jeweils mit dem entsprechenden Ende der in Richtung der ersten Leitungsstruktur 2 unmittelbar benachbarten zweiten Leitungsstruktur 22 gekoppelt. Die Leitungsstrukturen 2 und 22 sind über Leitungsverbindungsabschnitte 23 leitend verbunden, die im rechten Winkel zu den Leitungsstrukturen 2 und 22 angeordnet sind. Die als Antenne wirkende erste Leitungsstruktur 2 weist wie im Stand der Technik einen Fußpunkt bzw. Speisepunkt auf, an dem zwei Kontakte 24, 25 angeordnet sind. Die Kontakte 24, 25 sind die im Kontakt mit dem Halbleiter stehenden Punkte, zwischen denen eine Potentialdifferenz erzeugt wird, um die von dem Laserimpuls bzw. Laserspot 26 im Halbleiter erzeugten freien Ladungsträger zu beschleunigen. Wichtig ist, daß zwischen den Kontakten 24 und 25 ein durchgehender Halbleiterbereich existiert, der nicht durch einen Isolator unterbrochen ist. Da in der Anordnung gemäß Figur 5 eine direkte Kontaktierung ohne Kurzschluß nicht möglich ist, muß die benötigte Potentialdifferenz zwischen den Kontakten 24 und 25 ohne direkte Kontaktierung, beispielsweise durch gerichtete laserinduzierte Ströme, erzeugt werden.

Figur 6 zeigt eine alternative Ausführungsform des erfindungsgemäßen Senders bzw. Empfängers, wobei nur die als Antenne wirkenden Leitungsstrukturen dargestellt sind. Die Anordnung unterscheidet sich nur dadurch von der in Figur 5 dargestellten, daß das eine Ende der ersten Leitungsstruktur 2 mit dem entsprechenden Ende der auf der einen Seite der ersten Leitungsstruktur 2 unmittelbar benachbarten zweiten Leitungsstruktur 22a gekoppelt ist. Das andere Ende der ersten Leitungsstruktur 2 ist nur mit dem entsprechenden Ende der auf der anderen Seite der ersten Leitungsstruktur 2 unmittelbar benachbarten zweiten Leitungsstruktur 22a gekoppelt. Benachbarte erste bzw. zweite Leitungsstrukturen 2 bzw. 22a sind stets nur an einem Ende miteinander verbunden, so daß sich eine offene Schleifenstruktur ergibt. Die letzte zweite Leitungsstruktur 22a bildet hierbei jeweils ein offenes Leitungsende. Auch bei dieser Anordnung der Leitungsstrukturen kann die Anzahl der zweiten Leitungsstrukturen 22a beliebig variiert werden. Die Anzahl der Leitungsverbindungsabschnitte 23a ist jeweils gleich der Anzahl der zweiten Leitungsstrukturen 22a und somit halb so groß wie die Anzahl der Leitungsverbindungsabschnitte bei der Ausführungsform gemäß Fig. 5.

Ein großer Vorteil dieser Anordnung ist, daß eine direkte Kontaktierung der Leiterbahnen möglich ist, um eine Einrichtung 7 zum Erzeugen einer Potentialdifferenz bzw. eine Einrichtung 11 zum Erfassen einer Potentialdifferenz anzuschließen.

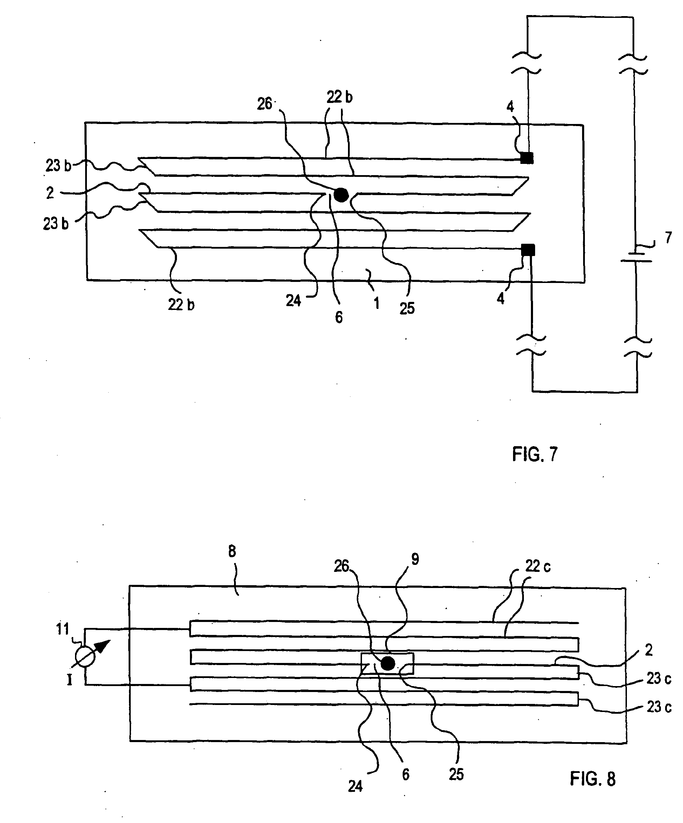

In Figur 7 ist eine weitere Ausführungsform eines erfindungsgemäßen THz-Senders dargestellt. Die erste Leitungsstruktur 2 ist wiederum eine λ/2-Dipolstruktur, welche auf der einen Seite mit zwei zweiten Leitungsstrukturen 22b und auf der anderen Seite mit drei zweiten Leitungsstrukturen 22b verbunden ist. Die erste Leitungsstruktur 2 und die zweiten Leitungsstrukturen 22b sind wieder parallel angeordnet. Sie sind durch Leitungsverbindungsabschnitte 23b verbunden, die statt rechtwinkelig wie in Figur 5 und 6 schräg verlaufen. Da die Länge der Leitungsverbindungsabschnitte 23, 23a, 23b klein gegen die Wellenlänge λ ist, ist die Form und die Ausrichtung der Leitungsverbindungsabschnitte für das Strahlungsverhalten der Gesamtanordnung vernachlässigbar. Die erste und die zweiten Leitungsstrukturen 2 und 23b sind auch hier auf einer durchgehenden Halbleiterschicht 1 angeordnet. Die äußeren zweiten Leitungsstrukturen 22b sind an ihren Enden mit Kontaktpads 4 verbunden, die über entsprechende Zuleitungen mit der Spannungsquelle 7 gekoppelt sind.

Figur 8 zeigt eine weitere offene Schleifenanordnung aus einer ersten Leitungsstruktur 2 und sechs zweiten Leitungsstrukturen 22c. Bei dieser Ausführungsform ist statt einer durchgehenden Halbleiterschicht eine Halbleiterregion 9 auf einem Substrat 8 vorgesehen. Die Halbleiterregion 9 ist bei dieser Ausführungsform etwas größer als der Bereich zwischen den beiden Kontakten 24, 25 des Fußpunktes. Bei dieser Ausführungsform sind auf beiden Seiten der ersten Leitungsstruktur 2 jeweils drei zweite Leitungsstrukturen 22c angeordnet, die über drei Leitungsverbindungsabschnitte 23c gekoppelt sind. Wie an der dargestellten Einrichtung 11 zum Erfassen einer Potentialdifferenz zu sehen ist, handelt es sich bei der dargestellten Ausführungsform um einen erfindungsgemäßen Empfänger.

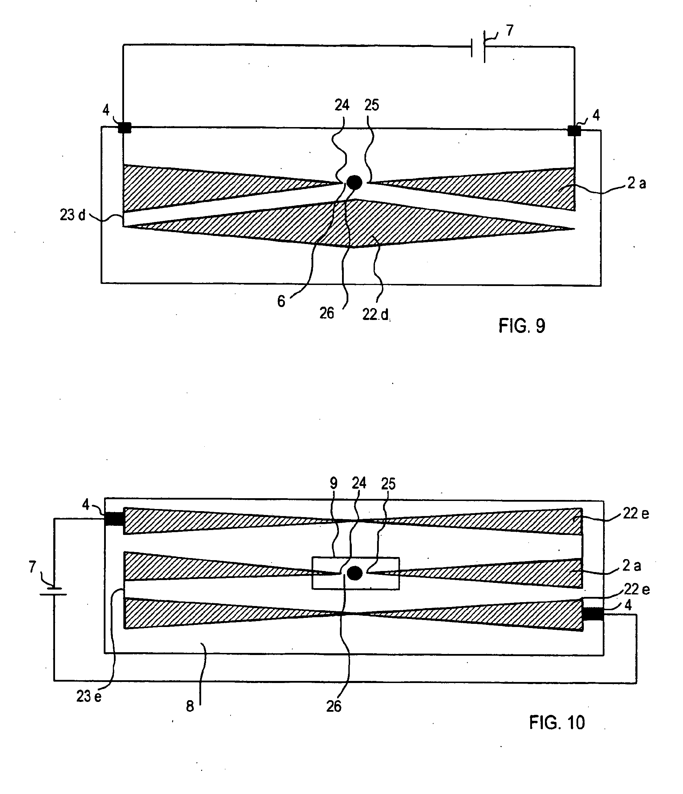

In Figur 9 ist eine weitere Ausführungsform eines erfindungsgemäßen Senders dargestellt. Bei der ersten Leitungsstruktur 2a, die aus zwei Abschnitten besteht, handelt es sich um eine Bow-Tie-Antennenstruktur. Zur Erhöhung des Strahlungswiderstandes ist eine ähnliche zweite Leitungsstruktur 22d mit axialem Abstand zur ersten Leitungsstruktur 2a und parallel zu dieser angeordnet. Die erste Leitungsstruktur 2a und die zweite Leitungsstruktur 22d sind auf einer Seite über einen Leitungsverbindungsabschnitt 23d verbunden. Auch mit dieser Anordnung gelingt es, die Abstrahlleistung wesentlich zu erhöhen.

Figur 10 zeigt eine weitere Ausführungsform des erfindungsgemäßen Senders, wobei die erste Leitungsstruktur 2a wiederum eine Bow-Tie-Antennenstruktur ist. Auf beiden Seiten der ersten Leitungsstruktur 2a ist jeweils eine zweite Leitungsstruktur 22e angeordnet. Die zweiten Leitungsstrukturen 22e unterscheiden sich nur dadurch von der ersten Leitungsstruktur 2a, daß keine Lücke 6 zwischen den beiden Abschnitten der Leitungsstrukturen 22e vorgesehen ist und damit kein separater Fußpunkt mit entsprechenden Kontakten. Die zweiten Leitungsstrukturen 22e sind durchgehend leitend.

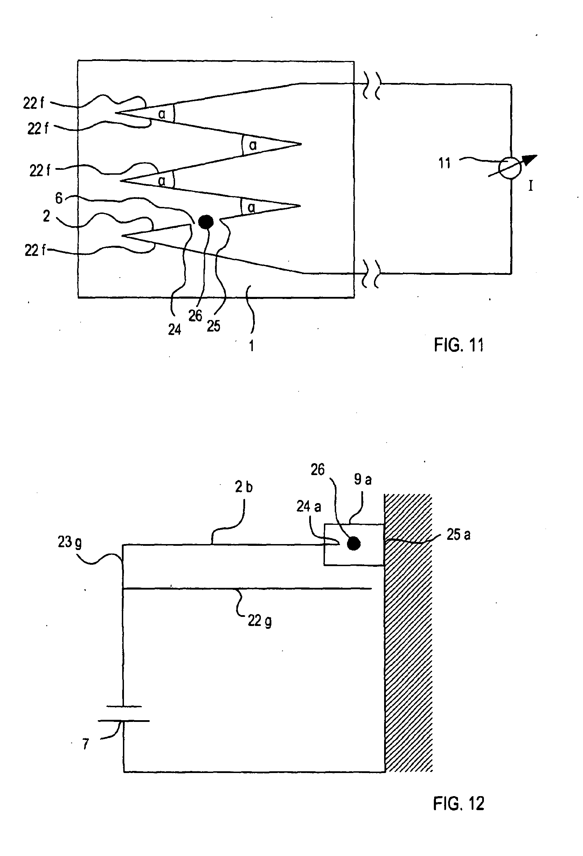

Figur 11 zeigt eine weitere Ausführungsform eines erfindungsgemäßen Empfängers, wobei die erste Leitungsstruktur 2 erneut eine λ/2- bzw. λ-Dipolstruktur ist. Auf der einen Seite der ersten Leitungsstruktur 2 ist eine zweite Leitungsstruktur 22f und auf der anderen Seite der ersten Leitungsstruktur 2 sind vier zweite Leitungsstrukturen 22f angeordnet. Die zweiten Leitungsstrukturen 22f unterscheiden sich wiederum nur durch den fehlenden Fußpunkt von der ersten Leitungsstruktur 2. Die Anordnung aus ersten und zweiten Leitungsstrukturen 2 bzw. 22f ist auf einer durchgehenden Halbleiterschicht 1 angeordnet. Die Leitungsstrukturen 2 bzw. 22f verlaufen spitzwinklig unter einem Winkel α zueinander und sind hier ohne Leitungsverbindungsabschnitte miteinander verbunden. Es ergibt sich dadurch eine zickzackförmige Leitungsstrukturanordnung. Alternativ könnten auch bei einer solchen zickzackförmigen Leitungsstrukturanordnung Leitungsverbindungsabschnitte vorgesehen werden.

Figur 12 zeigt einen Sender, wobei die erste Leitungsstruktur 2b als λ/4-Dipolstruktur ausgebildet ist. Das eine Ende der ersten Leitungsstruktur 2b bildet den ersten Kontakt 24a des Fußpunktes. Den zweiten Kontakt 25a bildet eine leitende Ebene, die mit einem Abstand kleiner als λ/8 zum Kontakt 24a angeordnet ist. Zwischen den beiden Kontakten 24a und 25a befindet sich wiederum eine Halbleiterregion 9a, auf die im Betrieb die Lichtimpulse gestrahlt werden. Parallel zur ersten Leitungsstruktur 2b ist eine zweite Leitungsstruktur 22g angeordnet, welche parallel zur ersten Leitungsstruktur 2b verläuft und über einen Leitungsverbindungsabschnitt 23g mit dieser verbunden ist.

Mit allen vorgenannten Ausführungsformen gelingt es, die Abstrahlleistung bzw. die Empfangsleistung eines THz-Senders bzw. -Empfängers um mehrere dB, im Idealfall um bis zu 30 dB zu erhöhen.

Im Rahmen der Erfindung sind zahlreich Weiterbildungen möglich. Insbesondere kann die Form der ersten und zweiten Leitungsstrukturen beliebig variiert werden. Auch die Anzahl der zweiten Leitungsstrukturen ist frei wählbar. Außerdem sei darauf hingewiesen, daß in der vorliegenden Beschreibung stets von λ/4 bzw. λ/2 bzw. λ-Dipolstrukturen die Rede ist. In der Praxis beeinflussen jedoch zahlreiche Faktoren das endgültige Abstrahlverhalten, so daß die Wellenlänge, bei der die maximale Abstrahlleistung erzielt wird, in der Regel nicht genau λ ist, sondern λ +/- 30 % beträgt. Ferner kann die Größe der bestrahlten Fläche zwischen den beiden Kontakten beliebig gewählt werden. Um möglichst viele freie Ladungsträger zur erzeugen, kann der gesamte Halbleiterbereich zwischen den beiden Kontakten bestrahlt werden. Schließlich kann die Lichtquelle beliebig gewählt werden. Hierunter sind alle Strahlungsquellen zu verstehen, die elektromagnetische Strahlung mit Wellenlängen im Bereich zwischen 2 µm bis 300 nm erzeugen. Folglich können auch Infrarot-Lichtquellen verwendet werden.

## Patentansprüche

1. Sender zum Erzeugen und Abstrahlen eines elektromagnetischen Impulses mit Anteilen in einem Höchstfrequenzbereich von 50 GHz bis 30 THz, mit
einer als Antenne wirkenden ersten Leitungsstruktur (2, 2a, 2b), die einen Fußpunkt aufweist, an dem zwei Kontakte (24, 24a; 25, 25a) angeordnet sind, wobei die als Antenne wirkende erste Leitungsstruktur (2, 2a, 2b) eine Bow-Tie-Leitungsstruktur oder eine λ/2- oder λ-Dipolstruktur ist, wobei λ die einer gewünschten Frequenz im Höchstfrequenzbereich zugeordnete Wellenlänge ist,
einem Halbleiterbereich zwischen den beiden Kontakten (24,24a; 25, 25a) des Fußpunktes, wobei der Halbleiterbereich ein photoleitendes Halbleitermaterial enthält,
einer Lichtquelle (14), die derart angeordnet und ausgebildet ist, daß Lichtimpulse auf den Halbleiterbereich gestrahlt werden können, und
einer Einrichtung (7) zum Erzeugen einer ein elektrisches Feld in dem Halbleitermaterial bewirkenden Potentialdifferenz zwischen den beiden Kontakten (24, 24a; 25, 25a) des Fußpunktes,
**dadurch gekennzeichnet, daß**
wenigstens eine zweite Leitungsstruktur (22, 22a, 22b, 22d, 22e, 22g) vorgesehen ist, die mit Abstand zum Fußpunkt angeordnet ist und derart ausgebildet und mit der ersten Leitungsstruktur (2, 2a, 2b) gekoppelt ist, daß am Fußpunkt der wirksame Strahlungswiderstand für wenigstens diejenige Frequenz in dem Höchstfrequenzbereich erhöht wird, bei der die maximale Abstrahlleistung erzielt wird, und dass
die wenigstens eine zweite Leitungsstruktur (22, 22a, 22b) eine Bow-Tie-Leitungsstruktur oder eine λ/2- oder λ-Dipolstruktur ist.

2. Sender nach Anspruch 1, **dadurch gekennzeichnet, daß** die wenigstens eine zweite Leitungsstruktur (22, 22a, 22b, 22d, 22e, 22g) derart ausgebildet und mit der ersten Leitungsstruktur (2, 2a, 2b) gekoppelt ist, daß am Fußpunkt der wirksame Strahlungswiderstand für wenigstens diejenige Frequenz in dem Höchstfrequenzbereich auf mehr als 300 Q, vorzugsweise mehr als 600 Ω erhöht wird, bei der die maximale Abstrahlleistung erzielt wird.

3. Sender nach Anspruch 1 oder 2, **dadurch gekennzeichnet, daß** die erste (2, 2a, 2b) und die wenigstens eine zweite Leitungsstruktur (22, 22a, 22b, 22d, 22e, 22g) auf einer durchgehenden Halbleiterschicht (1) aufgebracht sind, die zwischen den Kontakten des Fußpunktes den Halbleiterbereich bildet.

4. Sender nach Anspruch 1 oder 2, **dadurch gekennzeichnet, daß** die erste (2, 2a, 2b) und die wenigstens eine zweite Leitungsstruktur (22, 22a, 22b, 22d, 22e, 22g) auf einem Substrat (8) aufgebracht sind, in das zwischen den beiden Kontakten des Fußpunkts der Halbleiterbereich integriert ist.

5. Sender nach Anspruch 3 oder 4, **dadurch gekennzeichnet, daß** die erste (2, 2a, 2b) und die wenigstens eine zweite Leitungsstruktur (22, 22a, 22b, 22d, 22e, 22g) strukturierte Leiterschichten sind, die auf der durchgehenden Halbleiterschicht (1) oder dem Substrat (8) aufgebracht sind.

6. Sender nach einem der Ansprüche 1 bis 5, **dadurch gekennzeichnet, daß** die erste (2, 2a, 2b) und die wenigstens eine zweite Leitungsstruktur (22, 22a, 22b, 22d, 22e, 22g) aus Metall bestehen.

7. Sender nach einem der Ansprüche 1 bis 6, **dadurch gekennzeichnet, daß** die erste (2, 2a, 2b) und die wenigstens eine zweite Leitungsstruktur (22, 22a, 22b, 22d, 22e, 22g) eine längliche Form aufweisen und ihre Länge kleiner als 3 mm, vorzugsweise kleiner als 1 mm ist.

8. Sender nach einem der Ansprüche 1 bis 7, **dadurch gekennzeichnet, daß** die erste Leitungsstruktur (2, 2a, 2b) zwei Abschnitte aufweist, die sich vom Fußpunkt aus in zwei unterschiedlichen, vorzugsweise in entgegengesetzten Richtungen erstrecken.

9. Sender nach einem der Ansprüche 1 bis 8, **dadurch gekennzeichnet, daß** die erste Leitungsstruktur (2, 2a, 2b) eine Resonanzstruktur ist, die durch Veränderung ihrer Länge abgestimmt wird.

10. Sender nach einem der Ansprüche 1 bis 9, **dadurch gekennzeichnet, daß** die erste Leitungsstruktur (2, 2a) eine weniger als λ/8 breite Lücke (6) aufweist, die die erste Leitungsstruktur in zwei in axialer Richtung hintereinander liegende Abschnitte unterteilt und den Fußpunkt bildet, wobei jedem der beiden Abschnitte jeweils einer der beiden Kontakte (24, 25) zugeordnet ist und wobei λ die einer gewünschten Frequenz im Höchstfrequenzbereich zugeordnete Wellenlänge ist.

11. Sender nach Anspruch 10, **dadurch gekennzeichnet, daß** die Lücke (6) in der Mitte der ersten Leitungsstruktur (2, 2a) angeordnet ist.

12. Sender nach einem der Ansprüche 1 bis 11, **dadurch gekennzeichnet, daß** sich die Form der wenigstens einen zweiten Leitungsstruktur (22, 22a, 22b, 22d, 22e, 22g) nur durch den fehlenden Fußpunkt von der Form der ersten Leitungsstruktur (2, 2a, 2b) unterscheidet,
daß die erste (2, 2a, 2b) und die wenigstens eine zweite Leitungsstruktur (22, 22a, 22b, 22d, 22e, 22g) nebeneinander angeordnet sind und
daß die axialen Richtungen benachbarter Leitungsstrukturen einen Winkel (α) kleiner 70 Grad einschließen, vorzugsweise parallel sind.

13. Sender nach einem der Ansprüche 1 bis 12, **dadurch gekennzeichnet, daß** die Leitungsstrukturen jeweils eine Längsachse aufweisen und die Abstände der Längsachsen zwischen unmittelbar benachbarten Leitungsstrukturen jeweils kleiner als 0,5mm, vorzugsweise kleiner als 0,1mm sind.

14. Sender nach Anspruch 12, **dadurch gekennzeichnet, daß** die erste (2, 2a, 2b) und die wenigstens eine zweite Leitungsstruktur (22, 22a, 22b, 22d, 22e, 22g) eine längliche Form aufweisen und ihre Länge kleiner als 3 mm ist,
daß auf der einen Seite der ersten Leitungsstruktur (2) n zweite Leitungsstrukturen (22) und auf der anderen Seite der ersten Leitungsstruktur (2) m zweite Leitungsstrukturen (22) angeordnet sind, wobei wenigstens einer der Werte n und m größer gleich 1 ist,
daß die zur ersten Leitungsstruktur (2) unmittelbar benachbarten zweiten Leitungsstrukturen (22) an ihren beiden Enden jeweils mit dem entsprechenden Ende der ersten Leitungsstruktur (2) gekoppelt sind und
daß die anderen zweiten Leitungsstrukturen (22) an ihren beiden Enden jeweils mit dem entsprechenden Ende der in Richtung der ersten Leitungsstruktur (2) unmittelbar benachbarten zweiten Leitungsstruktur (22) gekoppelt sind.

15. Sender nach Anspruch 12, **dadurch gekennzeichnet, daß** die erste (2, 2a, 2b) und die wenigstens eine zweite Leitungsstruktur (22, 22a, 22b, 22d, 22e, 22g) eine längliche Form aufweisen und ihre Länge kleiner als 3 mm ist,
daß auf der einen Seite der ersten Leitungsstruktur (2) n zweite Leitungsstrukturen (22a) und auf der anderen Seite der ersten Leitungsstruktur(2) m zweite Leitungsstrukturen (22a) angeordnet sind, wobei wenigstens einer der Werte n und m größer gleich 1 ist,
daß das eine Ende der ersten Leitungsstruktur (2) mit dem entsprechenden Ende der auf der einen Seite der ersten Leitungsstruktur (2) unmittelbar benachbarten zweiten Leitungsstruktur (22a) gekoppelt ist,
daß das andere Ende der ersten Leitungsstruktur (2) mit dem entsprechenden Ende der auf der anderen Seite der ersten Leitungsstruktur unmittelbar benachbarten zweiten Leitungsstruktur (22a) gekoppelt ist,
daß jeweils das nicht mit der ersten Leitungsstruktur (2) gekoppelte Ende der der ersten Leitungsstruktur (2) unmittelbar benachbarten zweiten Leitungsstruktur (22a) ein offenes Leitungsende bildet oder, wenn auf der der ersten Leitungsstruktur (2) entgegengesetzten Seite der zweiten Leitungsstruktur (22a) eine weitere zweite Leitungsstruktur (22a) angeordnet ist, daß das nicht mit der ersten Leitungsstruktur (2) gekoppelte Ende der der ersten Leitungsstruktur (2) unmittelbar benachbarten zweiten Leitungsstruktur (22a) mit dem entsprechenden Ende dieser weiteren zweiten Leitungsstruktur (22a) gekoppelt ist, und
daß auf beiden Seiten der ersten Leitungsstruktur (2) die äußersten zweiten Leitungsstrukturen (22a) jeweils mit ihrem einen Ende mit dem entsprechenden Ende der in Richtung der ersten Leitungsstruktur (2) unmittelbar benachbarten zweiten Leitungsstruktur (22a) gekoppelt sind und daß ihr anderes Ende jeweils ein offenes Leitungsende bildet, und daß
sofern zwischen den äußersten zweiten Leitungsstrukturen (22a) und den der ersten Leitungsstruktur (2) unmittelbar benachbarten zweiten Leitungsstrukturen (22a) weitere zweite Leitungsstrukturen (22a) angeordnet sind, diese jeweils mit ihrem einen Ende mit dem entsprechenden Ende der auf der einen Seite unmittelbar benachbarten zweiten Leitungsstruktur (22a) gekoppelt sind und mit ihrem anderen Ende mit dem entsprechenden Ende der auf ihrer anderen Seite unmittelbar benachbarten zweiten Leitungsstruktur (22a) gekoppelt sind.

16. Sender nach Anspruch 14 oder 15, **dadurch gekennzeichnet, daß** m und n gleich sind.

17. Sender nach einem der Ansprüche 1 bis 16, **dadurch gekennzeichnet, daß** benachbarte Leitungsstrukturen (2, 2a, 2b; 22, 22a, 22b, 22d, 22e, 22g) über Leitungsverbindungsabschnitte (23, 23a, 23b, 23d, 23e, 23g) gekoppelt sind.

18. Sender nach Anspruch 17, **dadurch gekennzeichnet, daß** die Leitungsverbindungsabschnitte (23, 23a, 23b, 23d, 23e, 23g) kürzer als λ/8, vorzugsweise kürzer λ/10 sind, wobei λ die einer gewünschten Frequenz im Höchstfrequenzbereich zugeordnete Wellenlänge ist.

19. Sender nach Anspruch 17 oder 18, **dadurch gekennzeichnet, daß** die Leitungsstrukturen (2, 2a, 2b 22, 22a, 22d, 22e, 22g) parallel verlaufen und die Leitungsverbindungsabschnitte (23, 23a, 23d, 23e, 23g) zu diesen senkrecht angeordnet sind.

20. Sender nach einem der Ansprüche 1 bis 19, **dadurch gekennzeichnet, daß** die eine Potentialdifferenz erzeugende Einrichtung (7) eine Spannungsquelle ist.

21. Sender nach einem der Ansprüche 1 bis 20, **dadurch gekennzeichnet, daß** als Lichtquelle (14) ein Laser vorgesehen ist, der Lichtimpulse einer Dauer kleiner als 5 Pikosekunden, vorzugsweise kleiner als 1 Pikosekunde erzeugen kann.

22. Empfänger zum Empfangen eines elektromagnetischen Impulses mit Anteilen in einem Höchstfrequenzbereich von 50 GHz bis 30 THz, mit
einer als Antenne wirkenden ersten Leitungsstruktur (2), die einen Fußpunkt aufweist, an dem zwei Kontakte (24; 25) angeordnet sind, wobei die als Antenne wirkende erste Leitungsstruktur (2, 2a, 2c, 22f) eine Bow-Tie-Leitungsstruktur oder eine λ/2- oder λ-Dipolstruktur ist, wobei λ die einer gewünschten Frequenz im Höchstfrequenzbereich zugeordnete Wellenlänge ist,
einem Halbleiterbereich zwischen den beiden Kontakten (24; 25) des Fußpunktes, wobei der Halbleiterbereich ein photoleitendes Halbleitermaterial enthält,
einer Lichtquelle (14), die derart angeordnet und ausgebildet ist, daß Lichtimpulse auf den Halbleiterbereich gestrahlt werden können, und
einer Einrichtung (11) zum Erfassen einer Potentialdifferenz (24; 25) zwischen den beiden Kontakten des Fußpunktes,
**dadurch gekennzeichnet, daß**
wenigstens eine zweite Leitungsstruktur (22, 22a, 22c, 22f) vorgesehen ist, die mit Abstand zum Fußpunkt angeordnet ist und derart ausgebildet und mit der ersten Leitungsstruktur (2) gekoppelt ist, daß am Fußpunkt der wirksame Strahlungswiderstand für wenigstens diejenige Frequenz in dem Höchstfrequenzbereich erhöht wird, bei der die maximale Empfangsleistung erzielt wird, und daß
die wenigstens eine zweite Leitungsstruktur (22, 22a 22c, 22f) eine Bow-Tie-Leitungsstruktur oder eine λ/2- oder λ-Dipolstruktur ist.

23. Empfänger nach Anspruch 22, **dadurch gekennzeichnet, daß** die wenigstens eine zweite Leitungsstruktur (22, 22a 22c, 22f) derart ausgebildet und mit der ersten Leitungsstruktur (2) gekoppelt ist, daß am Fußpunkt der wirksame Strahlungswiderstand für wenigstens diejenige Frequenz in dem Höchstfrequenzbereich auf mehr als 300 Q, vorzugsweise mehr als 600 Ω erhöht wird, bei der die maximale Empfangsleistung erzielt wird.

24. Empfänger nach Anspruch 22 oder 23, **dadurch gekennzeichnet, daß** die erste (2) und die wenigstens eine zweite Leitungsstruktur (22, 22a, 22c, 22f) auf einer durchgehenden Halbleiterschicht (1) aufgebracht sind, die zwischen den Kontakten (24; 25) des Fußpunktes den Halbleiterbereich bildet.

25. Empfänger nach Anspruch 22 oder 23, **dadurch gekennzeichnet, daß** die erste (2) und die wenigstens eine zweite Leitungsstruktur (22, 22a 22c, 22f) auf einem Substrat (8) aufgebracht sind, in das zwischen den beiden Kontakten des Fußpunkts der Halbleiterbereich integriert ist.

26. Empfänger nach Anspruch 24 oder 25, **dadurch gekennzeichnet, daß** die erste (2) und die wenigstens eine zweite Leitungsstruktur (22, 22a, 22c, 22f) strukturierte Leiterschichten sind, die auf der durchgehenden Halbleiterschicht (1) oder dem Substrat (8) aufgebracht sind.

27. Empfänger nach einem der Ansprüche 22 bis 26, **dadurch gekennzeichnet, daß** die erste (2) und die wenigstens eine zweite Leitungsstruktur (22, 22a 22c, 22f) aus Metall bestehen.

28. Empfänger nach einem der Ansprüche 22 bis 27, **dadurch gekennzeichnet, daß** die erste (2) und die wenigstens eine zweite Leitungsstruktur (22, 22a 22c, 22f) eine längliche Form aufweisen und ihre Länge kleiner als 3 mm, vorzugsweise kleiner als 1 mm ist.

29. Empfänger nach einem der Ansprüche 22 bis 28, **dadurch gekennzeichnet, daß** die erste Leitungsstruktur (2) zwei Abschnitte aufweist, die sich vom Fußpunkt aus in zwei unterschiedlichen, vorzugsweise in entgegengesetzten Richtungen erstrecken.

30. Empfänger nach einem der Ansprüche 22 bis 29, **dadurch gekennzeichnet, daß** die erste Leitungsstruktur (2) eine Resonanzstruktur ist, die durch Veränderung ihrer Länge abgestimmt wird.

31. Empfänger nach einem der Ansprüche 21 bis 30, **dadurch gekennzeichnet, daß** die erste Leitungsstruktur (2) eine weniger als λ/8 breite Lücke (6) aufweist, die die erste Leitungsstruktur (2) in zwei in axialer Richtung hintereinander liegende Abschnitte unterteilt und den Fußpunkt bildet, wobei jedem der beiden Abschnitte jeweils einer der beiden Kontakte (24; 25) zugeordnet ist und wobei λ die einer gewünschten Frequenz im Höchstfrequenzbereich zugeordnete Wellenlänge ist.

32. Empfänger nach Anspruch 31, **dadurch gekennzeichnet, daß** die Lücke (6) in der Mitte der ersten Leitungsstruktur (2) angeordnet ist.

33. Empfänger nach einem der Ansprüche 21 bis 32, **dadurch gekennzeichnet, daß** sich die Form der wenigstens einen zweiten Leitungsstruktur (22, 22a, 22c, 22f) nur durch den fehlenden Fußpunkt von der Form der ersten Leitungsstruktur (2) unterscheidet,
daß die erste (2) und die wenigstens eine zweite Leitungsstruktur(22, 22a 22c, 22f) nebeneinander angeordnet sind und
daß die axialen Richtungen benachbarter Leitungsstrukturen einen Winkel (α) kleiner 70 Grad einschließen, vorzugsweise parallel sind.

34. Empfänger nach einem der Ansprüche 21 bis 33, **dadurch gekennzeichnet, daß** die Leitungsstrukturen jeweils eine Längsachse aufweisen und die Abstände der Längsachsen zwischen unmittelbar benachbarten Leitungsstrukturen jeweils kleiner als 0,5mm, vorzugsweise kleiner als 0,1mm sind.

35. Empfänger nach Anspruch 33, **dadurch gekennzeichnet, daß** die erste (2, 2a, 2b) und die wenigstens eine zweite Leitungsstruktur (22, 22a, 22b, 22d, 22e, 22g) eine längliche Form aufweisen und ihre Länge kleiner als 3 mm ist,
daß auf der einen Seite der ersten Leitungsstruktur (2) n zweite Leitungsstrukturen (22) und auf der anderen Seite der ersten Leitungsstruktur (2) m zweite Leitungsstrukturen (22) angeordnet sind, wobei wenigstens einer der Werte n und m größer gleich 1 ist,
daß die zur ersten Leitungsstruktur (2) unmittelbar benachbarten zweiten Leitungsstrukturen (22) an ihren beiden Enden jeweils mit dem entsprechenden Ende der ersten Leitungsstruktur (2) gekoppelt sind und
daß die anderen zweiten Leitungsstrukturen (22) an ihren beiden Enden jeweils mit dem entsprechenden Ende der in Richtung der ersten Leitungsstruktur (2) unmittelbar benachbarten zweiten Leitungsstruktur (22) gekoppelt sind.

36. Empfänger nach Anspruch 33, **dadurch gekennzeichnet, daß** die erste (2, 2a, 2b) und die wenigstens eine zweite Leitungsstruktur (22, 22a, 22b, 22d, 22e, 22g) eine längliche Form aufweisen und ihre Länge kleiner als 3 mm ist,
daß auf der einen Seite der ersten Leitungsstruktur (2) n zweite Leitungsstrukturen (22a) und auf der anderen Seite der ersten Leitungsstruktur (2) m zweite Leitungsstrukturen (22a) angeordnet sind, wobei wenigstens einer der Werte n und m größer gleich 1 ist,
daß das eine Ende der ersten Leitungsstruktur (2) mit dem entsprechenden Ende der auf der einen Seite der ersten Leitungsstruktur unmittelbar benachbarten zweiten Leitungsstruktur (22a) gekoppelt ist,
daß das andere Ende der ersten Leitungsstruktur (2) mit dem entsprechenden Ende der auf der anderen Seite der ersten Leitungsstruktur (2) unmittelbar benachbarten zweiten Leitungsstruktur (22a) gekoppelt ist,
daß jeweils das nicht mit der ersten Leitungsstruktur (2) gekoppelte Ende der der ersten Leitungsstruktur (2) unmittelbar benachbarten zweiten Leitungsstruktur (22a) ein offenes Leitungsende bildet oder, wenn auf der der ersten Leitungsstruktur (2) entgegengesetzten Seite der zweiten Leitungsstruktur (22a) eine weitere zweite Leitungsstruktur (22a) angeordnet ist, daß das nicht mit der ersten Leitungsstruktur (2) gekoppelte Ende der der ersten Leitungsstruktur (2) unmittelbar benachbarten zweiten Leitungsstruktur (22a) mit dem entsprechenden Ende dieser weiteren zweiten Leitungsstruktur (22a) gekoppelt ist, und
daß auf beiden Seiten der ersten Leitungsstruktur (2) die äußersten zweiten Leitungsstrukturen (22a) jeweils mit ihrem einen Ende mit dem entsprechenden Ende der in Richtung der ersten Leitungsstruktur (2) unmittelbar benachbarten zweiten Leitungsstruktur (22a) gekoppelt sind und daß ihr anderes Ende jeweils ein offenes Leitungsende bildet, und daß
sofern zwischen den äußersten zweiten Leitungsstrukturen (22a) und den der ersten Leitungsstruktur (2) unmittelbar benachbarten zweiten Leitungsstrukturen (22a) weitere zweite Leitungsstrukturen (22a) angeordnet sind, diese jeweils mit ihrem einen Ende mit dem entsprechenden Ende der auf der einen Seite unmittelbar benachbarten zweiten Leitungsstruktur (22a) gekoppelt sind und mit ihrem anderen Ende mit dem entsprechenden Ende der auf ihrer anderen Seite unmittelbar benachbarten zweiten Leitungsstruktur (22a) gekoppelt sind.

37. Empfänger nach Anspruch 35 oder 36, **dadurch gekennzeichnet, daß** m und n gleich sind.

38. Empfänger nach einem der Ansprüche 21 bis 37, **dadurch gekennzeichnet, daß**
benachbarte Leitungsstrukturen (2; 22, 22a, 22c) über Leitungsverbindungsabschnitte (23, 23a, 23c) gekoppelt sind.

39. Empfänger nach Anspruch 38, **dadurch gekennzeichnet, daß** die Leitungsverbindungsabschnitte (23, 23a, 23c) kürzer als λ/8, vorzugsweise kürzer λ/10 sind, wobei λ die einer gewünschten Frequenz im Höchstfrequenzbereich zugeordnete Wellenlänge ist.

40. Empfänger nach Anspruch 38 oder 39, **dadurch gekennzeichnet, daß** die Leitungsstrukturen (2; 22, 22a, 22c) parallel verlaufen und die Leitungsverbindungsabschnitte(23, 23a, 23c) zu diesen senkrecht angeordnet sind.

41. Empfänger nach einem der Ansprüche 21 bis 40, **dadurch gekennzeichnet, daß** die eine Potentialdifferenz erfassende Einrichtung (11) ein Amperemeter ist.

42. Empfänger nach einem der Ansprüche 21 bis 41, **dadurch gekennzeichnet, daß** als Lichtquelle (14) ein Laser vorgesehen ist, der Lichtimpulse einer Dauer kleiner als 5 Pikosekunden, vorzugsweise kleiner als 1 Pikosekunde erzeugen kann.

## Claims

1. Transmitter for generation and emission of an electromagnetic pulse with components in a superhigh frequency range of 50 GHz to 30 THz, with
a first conductor structure (2, 2a, 2b) which acts as an antenna and has a base on which two contacts (24, 24a; 25, 25a) are disposed, wherein the first conductor structure acting as an antenna is a bow-tie conductor structure or a λ/2 or λ dipole structure, where λ is the wavelength assigned to a desired frequency in the superhigh frequency range,
a semiconductor region between the two contacts (24, 24a; 25, 25a) of the base, the semiconductor region containing a photoconductive smiconductor material,
a light source (14) which is disposed and constructed in such a way that light pulses can be radiated onto the semiconductor region, and
a device (7) for generation of a potential difference which gives rise to an electrical field in the semiconductor material between the two contacts (24, 24a; 25, 25a) of the base,
**characterised in that**
at least one second conductor structure (22, 22a, 22b, 22d, 22e, 22g) is provided which is disposed spaced from the base and is constructed and coupled to the first conductor structure (2, 2a, 2b) in such a way that on the base the effective radiation resistance is increased for at least the frequency in the superhigh frequency range at which the maximum radiation power is achieved, and that
the at least one second conductor structure (22, 22a, 22b) is a bow-tie conductor structure or a λ/2 or λ dipole structure.

2. Transmitter as claimed in Claim 1, **characterised in that** the at least one second conductor structure (22, 22a, 22b, 22d, 22e, 22g) is constructed and coupled to the first conductor structure (2, 2a, 2b) in such a way that on the base the effective radiation resistance is increased to more than 300 Ω, preferably more than 600 Ω, for at least the frequency in the superhigh frequency range at which the maximum radiation power is achieved.

3. Transmitter as claimed in Claim 1 or Claim 2, **characterised in that** the first (2, 2a, 2b) and the at least one second conductor structure (22, 22a, 22b, 22d, 22e, 22g) is applied to a continuous semiconductor layer (1) which forms the semiconductor region between the contacts of the base.

4. Transmitter as claimed in Claim 1 or Claim 2, **characterised in that** the first (2, 2a, 2b) and the at least one second conductor structure (22, 22a, 22b, 22d, 22e, 22g) is applied to a substrate (8) into which the semiconductor region is integrated between the two contacts of the base.

5. Transmitter as claimed in Claim 3 or Claim 4, **characterised in that** the first (2, 2a, 2b) and the at least one second conductor structure (22, 22a, 22b, 22d, 22e, 22g) are structured conductor layers which are applied to the continuous semiconductor layer (1) or the substrate (8).

6. Transmitter as claimed in any one of Claims 1 to 5, **characterised in that** the first (2, 2a, 2b) and the at least one second conductor structure (22, 22a, 22b, 22d, 22e, 22g) are made from metal.

7. Transmitter as claimed in any one of Claims 1 to 6, **characterised in that** the first (2, 2a, 2b) and the at least one second conductor structure (22, 22a, 22b, 22d, 22e, 22g) have an elongate shape and a length of less than 3 mm, preferably less than 1 mm.

8. Transmitter as claimed in any one of Claims 1 to 7, **characterised in that** the first conductor structure (2, 2a, 2b) has two sections which extend from the base in two different directions, preferably in opposing directions.

9. Transmitter as claimed in any one of Claims 1 to 8, **characterised in that** the first conductor structure (2, 2a, 2b) is a resonant structure which is tuned by changing its length.

10. Transmitter as claimed in any one of Claims 1 to 9, **characterised in that** the first conductor structure (2, 2a) has a gap (6) less than λ/8 wide which divides the first conductor structure into two sections lying one another in the axial direction and forms the base, wherein a respective one of the two contacts (24, 25) is assigned to each of the two sections, where λ is the wavelength assigned to a desired frequency in the superhigh frequency range.

11. Transmitter as claimed in Claim 10, **characterised in that** the gap (6) is disposed in the centre of the first conductor structure (2, 2a).

12. Transmitter as claimed in any one of Claims 1 to 11, **characterised in that** the shape of the at least one second conductor structure (22, 22a, 22b, 22d, 22e, 22g) is only distinguished from the shape of the first conductor structure (2, 2a, 2b) only by the lack of base,
that the first (2, 2a, 2b) and the at least one second conductor structure (22, 22a, 22b, 22d, 22e, 22g) are disposed adjacent to one another, and
that the axial directions of adjacent conductor structures enclose an angle (α) less than 70 degrees, and are preferably parallel.

13. Transmitter as claimed in any one of Claims 1 to 12, **characterised in that** the conductor structures each have a longitudinal axis and the spacings of the longitudinal axes between immediately adjacent conductor structures are in each case less than 0.5 mm, preferably less than 0.1 mm.

14. Transmitter as claimed in Claim 12, **characterised in that** the first (2, 2a, 2b) and the at least one second conductor structure (22, 22a, 22b, 22d, 22e, 22g) have an elongate shape and a length of less than 3 mm,
that n second conductor structures are disposed on one side of the first conductor structure (2) and m second conductor structures (22) are disposed on the other side of the first conductor structure (2), wherein at least one of the values n and m is greater than or equal to 1,
that the second conductor structures (22) immediately adjacent to the first conductor structure (2) are coupled at both ends respectively to the corresponding end of the first conductor structure (2), and
that the other second conductor structures (22) are coupled at both ends respectively to the corresponding end of second conductor structure (22) immediately adjacent in the direction of the first conductor structure (2).

15. Transmitter as claimed in Claim 12, **characterised in that** the first (2, 2a, 2b) and the at least one second conductor structure (22, 22a, 22b, 22d, 22e, 22g) have an elongate shape and a length of less than 3 mm,
that that n second conductor structures (22a) are disposed on one side of the first conductor structure (2) and m second conductor structures (22a) are disposed on the other side of the first conductor structure (2), wherein at least one of the values n and m is greater than or equal to 1,
that one end of the first conductor structure (2) is coupled to the corresponding end of the conductor structure (22a) immediately adjacent on one side of the first conductor structure (2),
that the other end of the first conductor structure (2) is coupled to the corresponding end of the conductor structure (22a) immediately adjacent on one side of the first conductor structure (2),
that in each case the end of the second conductor structure (22a) immediately adjacent to the first conductor structure (2) which is not coupled to the first conductor structure (2) forms an open conductor end or, when a further second conductor structure (22a) is disposed on the side of the second conductor structure (22a) opposite the first conductor structure (2), that the end of the second conductor structure (22a) immediately adjacent to the first conductor structure (2) which is not coupled to the first conductor structure (2) is coupled to the corresponding end of this further second conductor structure (22a), and
that on both sides of the first conductor structure (2) the outermost second conductor structures (22a) are each coupled with one end to the corresponding end of the second conductor structure (22a) immediately adjacent in the direction of the first conductor structure (2), and that their respective other end forms an open conductor end, and that
so long as further second conductor structures (22a) are disposed between the outermost second conductor structures (22a) and the second conductor structures (22a) immediately adjacent to the first conductor structure (2), these are each coupled with one end to the corresponding end of the second conductor structure (22a) immediately adjacent on one side and are coupled with their other end to the corresponding end of the second conductor structure (22a) immediately adjacent on the other side.

16. Transmitter as claimed in Claim 14 or Claim 15, **characterised in that** m and n are equal.

17. Transmitter as claimed in any one of Claims 1 to 16, **characterised in that** adjacent conductor structures (2, 2a, 2b; 22, 22a, 22b, 22d, 22e, 22g) are coupled by way of conductor connecting sections (23, 23a, 23b, 23d, 23e, 23g).

18. Transmitter as claimed in Claim 17, **characterised in that** the conductor connecting sections (23, 23a, 23b, 23d, 23e, 23g) are shorter than λ/8, preferably shorter than λ/10, where λ is the wavelength assigned to a desired frequency in the superhigh frequency range.

19. Transmitter as claimed in Claim 17 or Claim 18, **characterised in that** the conductor structures (2, 2a, 2b; 22, 22a, 22b, 22d, 22e, 22g) extend parallel and the conductor connecting sections (23, 23a, 23b, 23d, 23e, 23g) are disposed perpendicular thereto.

20. Transmitter as claimed in any one of Claims 1 to 19, **characterised in that** the device (7) which generates a potential difference is a voltage source.

21. Transmitter as claimed in any one of Claims 1 to 20, **characterised in that** a laser is provided as the light source (14) and can generate light pulses with a duration of less than 5 picoseconds, preferably less than 1 picosecond.

22. Receiver for reception of an electromagnetic pulse with components in a superhigh frequency range from 50 GHz to 30 THz, with
a first conductor structure (2) which acts as an antenna and has a base on which two contacts (24; 25) are disposed, wherein the first conductor structure (22f) acting as an antenna is a bow-tie conductor structure or a λ/2 or λ dipole structure, where λ is the wavelength assigned to a desired frequency in the superhigh frequency range,
a semiconductor region between the two contacts (24; 25) of the base, the semiconductor region containing a photoconductive semiconductor material,
a light source (14) which is disposed and constructed in such a way that light pulses can be radiated onto the semiconductor region, and
a device (11 for detection of a potential difference (24; 25) between the two contacts of the base,
**characterised in that**
at least one second conductor structure (22, 22a, 22c, 22f) is provided which is disposed spaced from the base and is constructed and coupled to the first conductor structure (2) in such a way that on the base the effective radiation resistance is increased for at least the frequency in the superhigh frequency range at which the maximum radiation power is achieved, and that
the at least one second conductor structure (22, 22a, 22c, 22f) is a bow-tie conductor structure or a λ/2 or λ dipole structure.

23. Receiver as claimed in Claim 22, **characterised in that** the at least one conductor structure (22, 22a, 22c, 22f) is constructed and coupled to the first conductor structure (2) in such a way that on the base the effective radiation resistance is increased to more than 300 Ω, preferably more than 600 Ω, for at least the frequency in the superhigh frequency range at which the maximum radiation power is achieved.

24. Receiver as claimed in Claim 22 or Claim 23, **characterised in that** the first (2) and the at least one second conductor structure (22, 22a, 22c, 22f) is applied to a continuous semiconductor layer (1) which forms the semiconductor region between the contacts (24; 25) of the base.

25. Receiver as claimed in Claim 22 or Claim 23, **characterised in that** the first (2) and the at least one second conductor structure (22, 22a, 22c, 22f) is applied to a substrate (8) into which the semiconductor region is integrated between the two contacts of the base.

26. Receiver as claimed in Claim 24 or Claim 25, **characterised in that** the first (2) and the at least one second conductor structure (22, 22a, 22c, 22f) are structured conductor layers which are applied to the continuous semiconductor layer (1) or the substrate (8).

27. Receiver as claimed in any one of Claims 22 to 26, **characterised in that** the first (2) and the at least one second conductor structure (22, 22a, 22c, 22f) are made from metal.

28. Receiver as claimed in any one of Claims 22 to 27, **characterised in that** the first (2) and the at least one second conductor structure (22, 22a, 22c, 22f) have an elongate shape and a length of less than 3 mm, preferably less than 1 mm.

29. Receiver as claimed in any one of Claims 22 to 28, **characterised in that** the first conductor structure (2) has two sections which extend from the base in two different directions, preferably in opposing directions.

30. Receiver as claimed in any one of Claims 22 to 29, **characterised in that** the first conductor structure (2) is a resonant structure which is tuned by changing its length.

31. Receiver as claimed in any one of Claims 21 to 30, **characterised in that** the first conductor structure (2) has a gap (6) less than λ/8 wide which divides the first conductor structure (2) into two sections lying one another in the axial direction and forms the base, wherein a respective one of the two contacts (24; 25) is assigned to each of the two sections, where λ is the wavelength assigned to a desired frequency in the superhigh frequency range.

32. Receiver as claimed in Claim 31, **characterised in that** the gap (6) is disposed in the centre of the first conductor structure (2).

33. Receiver as claimed in any one of Claims 21 to 32, **characterised in that** the shape of the at least one second conductor structure (22, 22a, 22c, 22f) is only distinguished from the shape of the first conductor structure (2) only by the lack of base,
that the first (2) and the at least one second conductor structure (22, 22a, 22c, 22f) are disposed adjacent to one another, and
that the axial directions of adjacent conductor structures enclose an angle (α) less than 70 degrees, and are preferably parallel.

34. Receiver as claimed in any one of Claims 21 to 33, **characterised in that** the conductor structures each have a longitudinal axis and the spacings of the longitudinal axes between immediately adjacent conductor structures are in each case less than 0.5 mm, preferably less than 0.1 mm.

35. Receiver as claimed in Claim 33, **characterised in that** the first (2, 2a, 2b) and the at least one second conductor structure (22, 22a, 22b, 22d, 22e, 22g) have an elongate shape and a length of less than 3 mm,
that n second conductor structures (22) are disposed on one side of the first conductor structure (2) and m second conductor structures (22) are disposed on the other side of the first conductor structure (2), wherein at least one of the values n and m is greater than or equal to 1,
that the second conductor structures (22) immediately adjacent to the first conductor structure (2) are coupled at both ends respectively to the corresponding end of the first conductor structure (2), and
that the other second conductor structures (22) are coupled at both ends respectively to the corresponding end of second conductor structure (22) immediately adjacent in the direction of the first conductor structure (2).

36. Receiver as claimed in Claim 33, **characterised in that** the first (2, 2a, 2b) and the at least one second conductor structure (22, 22a, 22b, 22d, 22e, 22g) have an elongate shape and a length of less than 3 mm,
that that n second conductor structures (22a) are disposed on one side of the first conductor structure (2) and m second conductor structures (22a) are disposed on the other side of the first conductor structure (2), wherein at least one of the values n and m is greater than or equal to 1,
that one end of the first conductor structure (2) is coupled to the corresponding end of the conductor structure (22a) immediately adjacent on one side of the first conductor structure,
that the other end of the first conductor structure (2) is coupled to the corresponding end of the conductor structure (22a) immediately adjacent on one side of the first conductor structure (2),
that in each case the end of the second conductor structure (22a) immediately adjacent to the first conductor structure (2) which is not coupled to the first conductor structure (2) forms an open conductor end or, when a further second conductor structure (22a) is disposed on the side of the second conductor structure (22a) opposite the first conductor structure (2), that the end of the second conductor structure (22a) immediately adjacent to the first conductor structure (2) which is not coupled to the first conductor structure (2) is coupled to the corresponding end of this further second conductor structure (22a), and
that on both sides of the first conductor structure (2) the outermost second conductor structures (22a) are each coupled with one end to the corresponding end of the second conductor structure (22a) immediately adjacent in the direction of the first conductor structure (2), and that their respective other end forms an open conductor end, and that
so long as further second conductor structures (22a) are disposed between the outermost second conductor structures (22a) and the second conductor structures (22a) immediately adjacent to the first conductor structure (2), these are each coupled with one end to the corresponding end of the second conductor structure (22a) immediately adjacent on one side and are coupled with their other end to the corresponding end of the second conductor structure (22a) immediately adjacent on the other side.

37. Receiver as claimed in Claim 35 or Claim 36, **characterised in that** m and n are equal.

38. Receiver as claimed in any one of Claims 21 to 37, **characterised in that** adjacent conductor structures (2; 22, 22a, 22c) are coupled by way of conductor connecting sections (23, 23a, 23c).

39. Receiver as claimed in Claim 38, **characterised in that** the conductor connecting sections (23, 23a, 23c) are shorter than λ/8, preferably shorter than λ/10, where λ is the wavelength assigned to a desired frequency in the superhigh frequency range.

40. Receiver as claimed in Claim 38 or Claim 39, **characterised in that** the conductor structures (2; 22, 22a, 22c) extend parallel and the conductor connecting sections (23, 23a, 23c) are disposed perpendicular thereto.

41. Receiver as claimed in any one of Claims 21 to 40, **characterised in that** the device (11) which generates a potential difference is an ammeter.

42. Receiver as claimed in any one of Claims 21 to 41, **characterised in that** a laser is provided as the light source (14) and can generate light pulses with a duration of less than 5 picoseconds, preferably less than 1 picosecond.

## Revendications

1. Emetteur pour générer et émettre une impulsion électromagnétique avec des fractions dans une plage de très hautes fréquences de 50 GHz à 30 THz, comprenant :
une première structure de ligne (2, 2a, 2b) servant d'antenne, qui présente une base, sur laquelle sont aménagés deux contacts (24, 24a ; 25, 25a), laquelle première structure de ligne (2, 2a, 2b) servant d'antenne est une structure de ligne de type noeud papillon ou une structure dipolaire λ/2 ou λ, λ étant la longueur d'onde affectée à une fréquence souhaitée dans la plage des très hautes fréquences,
une zone semi-conductrice entre les deux contacts (24, 24a ; 25, 25a) de la base, laquelle zone semi-conductrice contient un matériau semi-conducteur photoconducteur,
une source de lumière (14), qui est aménagée et conçue de sorte que des impulsions de lumière puissent être émises sur la zone semi-conductrice, et
un dispositif (7) pour générer une différence de potentiel entre les deux contacts (24, 24a ; 25, 25a) de la base provoquant un champ électrique dans le matériau semi-conducteur,
**caractérisé en ce que**
il est prévu au moins une seconde structure de ligne (22, 22a, 22b, 22d, 22e, 22g) qui est aménagée à distance de la base et conçue et couplée à la première structure de ligne (2, 2a, 2b) de sorte que, sur la base, la résistance de rayonnement efficace soit augmentée pour au moins la fréquence dans la plage de très hautes fréquences, à laquelle est obtenue la puissance de rayonnement maximale, et **en ce que**
la au moins une seconde structure de ligne (22, 22a, 22b) est une structure de ligne de type noeud papillon ou une structure dipolaire λ/2 ou λ.

2. Emetteur selon la revendication 1, **caractérisé en ce que** la au moins une seconde structure de ligne (22, 22a, 22b, 22d, 22e, 22g) est conçue et couplée à la première structure de ligne (2, 2a, 2b) de sorte que, sur la base, la résistance de rayonnement efficace soit augmentée pour au moins la fréquence dans la plage de très hautes fréquences à plus de 300 Ω, de préférence à plus de 600 Ω, à laquelle est obtenue la puissance de rayonnement maximale.

3. Emetteur selon la revendication 1 ou 2, **caractérisé en ce que** la première structure de ligne (2, 2a, 2b) et la au moins une seconde structure de ligne (22, 22a, 22b, 22d, 22e, 22g) sont appliquées sur une couche semi-conductrice continue (1) qui forme la zone semi-conductrice entre les contacts de la base.

4. Emetteur selon la revendication 1 ou 2, **caractérisé en ce que** la première structure de ligne (2, 2a, 2b) et la au moins une seconde structure de ligne (22, 22a, 22b, 22d, 22e, 22g) sont appliquées sur un substrat (8), auquel est intégrée la zone semi-conductrice entre les deux contacts de la base.

5. Emetteur selon la revendication 3 ou 4, **caractérisé en ce que** la première structure de ligne (2, 2a, 2b) et la au moins une seconde structure de ligne (22, 22a, 22b, 22d, 22e, 22g) sont des couches conductrices structurées qui sont appliquées sur la couche semi-conductrice continue (1) ou sur le substrat (8).

6. Emetteur selon l'une quelconque des revendications 1 à 5, **caractérisé en ce que** la première structure de ligne (2, 2a, 2b) et la au moins une seconde structure de ligne (22, 22a, 22b, 22d, 22e, 22g) sont constituées de métal.

7. Emetteur selon l'une quelconque des revendications 1 à 6, **caractérisé en ce que** la première structure de ligne (2, 2a, 2b) et la au moins une seconde structure de ligne (22, 22a, 22b, 22d, 22e, 22g) présentent une forme allongée et **en ce que** leur longueur est inférieure à 3 mm, de préférence inférieure à 1 mm.

8. Emetteur selon l'une quelconque des revendications 1 à 7, **caractérisé en ce que** la première structure de ligne (2, 2a, 2b) présente deux sections qui s'étendent depuis la base dans deux directions différentes, de préférence des sens opposés.

9. Emetteur selon l'une quelconque des revendications 1 à 8, **caractérisé en ce que** la première structure de ligne (2, 2a, 2b) est une structure de résonance, qui est ajustée en faisant varier sa longueur.

10. Emetteur selon l'une quelconque des revendications 1 à 9, **caractérisé en ce que** la première structure de ligne (2, 2a) présente un vide (6) d'une largeur inférieure à λ/8, qui subdivise la première structure de ligne en deux sections situées l'une derrière l'autre dans la direction axiale et forme la base, chacune des deux sections étant respectivement affectée à un des deux contacts (24, 25) et λ étant la longueur d'onde affectée à une fréquence souhaitée dans la plage des très hautes fréquences.

11. Emetteur selon la revendication 10, **caractérisé en ce que** le vide (6) est ménagé au centre de la première structure de ligne (2, 2a).

12. Emetteur selon l'une quelconque des revendications 1 à 11, **caractérisé en ce que** la forme de la au moins une seconde structure de ligne (22, 22a, 22b, 22d, 22e, 22g) ne diffère que par la base manquante de la forme de la première structure de ligne (2, 2a, 2b),
**en ce que** la première structure de ligne (2, 2a, 2b) et la au moins une seconde structure de ligne (22, 22a, 22b, 22d, 22e, 22g) sont disposées l'une à côté de l'autre, et
**en ce que** les directions axiales de structures de ligne adjacentes incluent un angle (α) inférieur à 70 degrés, de préférence sont parallèles.

13. Emetteur selon l'une quelconque des revendications 1 à 12, **caractérisé en ce que** les structures de ligne présentent respectivement un axe longitudinal et les écarts des axes longitudinaux entre des structures de ligne immédiatement adjacentes sont respectivement inférieurs à 0,5 mm, de préférence inférieurs à 0,1 mm.

14. Emetteur selon la revendication 12, **caractérisé en ce que** la première structure de ligne (2, 2a, 2b) et la au moins une seconde structure de ligne (22, 22a, 22b, 22d, 22e, 22g) présentent une forme allongée et **en ce que** leur longueur est inférieure à 3 mm,
**en ce que** l'on aménage n secondes structures de ligne (22) sur l'une des faces de la première structure de ligne (2) et m secondes structures de ligne (22) sur l'autre face de la première structure de ligne (2), au moins une des valeurs n et m étant supérieure ou égale à 1,
**en ce que** les secondes structures de ligne (22) immédiatement adjacentes à la première structure de ligne (2) sont, à leurs deux extrémités, couplées respectivement à l'extrémité correspondante de la première structure de ligne (2), et
**en ce que** les autres secondes structures de ligne (22) sont, à leurs deux extrémités, couplées respectivement à l'extrémité correspondante de la seconde structure de ligne (22) immédiatement adjacente dans la direction de la première structure de ligne (2).

15. Emetteur selon la revendication 12, **caractérisé en ce que** la première structure de ligne (2, 2a, 2b) et la au moins une seconde structure de ligne (22, 22a, 22b, 22d, 22e, 22g) présentent une forme allongée et **en ce que** leur longueur est inférieure à 3 mm,
**en ce que** l'on aménage n secondes structures de ligne (22a) sur l'une des faces de la première structure de ligne (2) et m secondes structures de ligne (22a) sur l'autre face de la première structure de ligne (2), au moins une des valeurs n et m étant supérieure ou égale à 1,
**en ce que** l'une des extrémités de la première structure de ligne (2) est couplée à l'extrémité correspondante de la seconde structure de ligne (22a) immédiatement adjacente à l'une des faces de la première structure de ligne (2),
**en ce que** l'autre extrémité de la première structure de ligne (2) est couplée à l'extrémité correspondante de la seconde structure de ligne (22a) immédiatement adjacente à l'autre face de la première structure de ligne (2),
**en ce que** respectivement l'extrémité, non couplée à la première structure de ligne (2), de la seconde structure de ligne (22a) immédiatement adjacente à la première structure de ligne (2) forme une extrémité de ligne ouverte ou lorsqu'une autre seconde structure de ligne (22a) est aménagée sur la face de la seconde structure de ligne (22a) opposée à la première structure de ligne (2), **en ce que** l'extrémité, non couplée à la première structure de ligne (2), de la seconde structure de ligne (22a) immédiatement adjacente à la première structure de ligne (2) est couplée à l'extrémité correspondante de cette autre seconde structure de ligne (22a), et
**en ce que**, sur les deux faces de la première structure de ligne (2), les secondes structures de ligne (22a) les plus externes sont couplées à l'une de leurs extrémités respectivement à l'extrémité correspondante de la seconde structure de ligne (22a) immédiatement adjacente dans la direction de la première structure de ligne (2) et **en ce que** leur autre extrémité forme respectivement une extrémité de ligne ouverte, et **en ce que**,
pour autant que d'autres secondes structures de ligne (22a) soient aménagées entre les secondes structures de ligne (22a) les plus externes et les secondes structures de ligne (22a) immédiatement adjacentes à la première structure de ligne (2), celles-ci sont couplées à l'une de leurs extrémités respectivement à l'extrémité correspondante de la seconde structure de ligne (22a) immédiatement adjacente sur l'une des faces et avec leur autre extrémité à l'extrémité correspondante de la seconde structure de ligne (22a) immédiatement adjacente à son autre face.

16. Emetteur selon la revendication 14 ou 15, **caractérisé en ce que** les valeurs m et n sont identiques.

17. Emetteur selon l'une quelconque des revendications 1 à 16, **caractérisé en ce que** les structures de ligne adjacentes (2, 2a, 2b ; 22, 22a, 22b, 22d, 22e, 22g) sont couplées via des sections de raccordement de lignes (23, 23a, 23b, 23d, 23e, 23g).

18. Emetteur selon la revendication 17, **caractérisé en ce que** les sections de raccordement de lignes (23, 23a, 23b, 23d, 23e, 23g) sont inférieures à λ/8, de préférence inférieures à λ/10, λ étant la longueur d'onde affectée à une fréquence souhaitée dans la plage des très hautes fréquences.

19. Emetteur selon la revendication 17 ou 18, **caractérisé en ce que** les structures de ligne (2, 2a, 2b 22, 22a, 22d, 22e, 22g) s'étendent parallèlement et les sections de raccordement de lignes (23, 23a, 23d, 23e, 23g) sont aménagées perpendiculairement à celles-ci.

20. Emetteur selon l'une quelconque des revendications 1 à 19, **caractérisé en ce que** le dispositif (7) générant une différence de potentiel est une source de tension.

21. Emetteur selon l'une quelconque des revendications 1 à 20, **caractérisé en ce qu'**il est prévu comme source de lumière (14) un laser qui peut générer des impulsions de lumière d'une durée inférieure à 5 picosecondes, de préférence inférieure à 1 picoseconde.

22. Récepteur pour recevoir une impulsion électromagnétique avec des fractions dans une plage de très hautes fréquences de 50 GHz à 30 THz, comprenant :
une première structure de ligne (2) servant d'antenne qui présente une base, sur laquelle sont aménagés deux contacts (24 ; 25), laquelle première structure de ligne (2, 2a, 2c, 22f) servant d'antenne est une structure de ligne de type noeud papillon ou une structure dipolaire λ/2 ou λ, λ étant la longueur d'onde affectée à une fréquence souhaitée dans la plage des très hautes fréquences,
une zone semi-conductrice entre les deux contacts (24 ; 25) de la base, laquelle zone semi-conductrice contient un matériau semi-conducteur photoconducteur,
une source de lumière (14), qui est aménagée et conçue de sorte que des impulsions de lumière puissent être émises sur la zone semi-conductrice, et
un dispositif (11) pour enregistrer une différence de potentiel (24 ; 25) entre les deux contacts de la base,
**caractérisé en ce que**
il est prévu au moins une seconde structure de ligne (22, 22a, 22c, 22f) qui est aménagée à distance de la base et qui est conçue et couplée à la première structure de ligne (2) de sorte que, sur la base, la résistance de rayonnement efficace soit augmentée pour au moins la fréquence dans la plage des très hautes fréquences, à laquelle est obtenue la puissance de réception maximale, et **en ce que**
la au moins une seconde structure de ligne (22, 22a, 22c, 22f) est une structure de ligne de type noeud papillon ou une structure dipolaire λ/2 ou λ.

23. Récepteur selon la revendication 22, **caractérisé en ce que** la au moins une seconde structure de ligne (22, 22a 22c, 22f) est conçue et couplée à la première structure de ligne (2) de sorte que, sur la base, la résistance de rayonnement efficace soit augmentée pour au moins la fréquence dans la plage des très hautes fréquences à plus de 300 Ω, de préférence plus de 600 Ω, à laquelle est obtenue la puissance de réception maximale.

24. Récepteur selon la revendication 22 ou 23, **caractérisé en ce que** la première structure de ligne (2) et la au moins une seconde structure de ligne (22, 22a, 22c, 22f) sont appliquées sur une couche semi-conductrice continue (1), qui forme la zone semi-conductrice entre les contacts (24 ; 25) de la base.

25. Récepteur selon la revendication 22 ou 23, **caractérisé en ce que** la première structure de ligne (2) et la au moins une seconde structure de ligne (22, 22a 22c, 22f) sont appliquées sur un substrat (8), auquel est intégrée la zone semi-conductrice entre les deux contacts de la base.

26. Récepteur selon la revendication 24 ou 25, **caractérisé en ce que** la première structure de ligne (2) et la au moins une seconde structure de ligne (22, 22a, 22c, 22f) sont des couches conductrices structurées qui sont appliquées sur la couche semi-conductrice continue (1) ou le substrat (8).

27. Récepteur selon l'une quelconque des revendications 22 à 26, **caractérisé en ce que** la première structure de ligne (2) et la au moins une seconde structure de ligne (22, 22a 22c, 22f) sont constituées de métal.

28. Récepteur selon l'une quelconque des revendications 22 à 27, **caractérisé en ce que** la première structure de ligne (2) et la au moins une seconde structure de ligne (22, 22a 22c, 22f) présentent une forme allongée et **en ce que** leur longueur est inférieure à 3 mm, de préférence inférieure à 1 mm.

29. Récepteur selon l'une quelconque des revendications 22 à 28, **caractérisé en ce que** la première structure de ligne (2) présente deux sections qui s'étendent depuis la base dans deux directions différentes, de préférence dans des sens opposés.

30. Récepteur selon l'une quelconque des revendications 22 à 29, **caractérisé en ce que** la première structure de ligne (2) est une structure de résonance, qui est ajustée en faisant varier sa longueur.

31. Récepteur selon l'une quelconque des revendications 21 à 30, **caractérisé en ce que** la première structure de ligne (2) présente un vide (6) d'une largeur inférieure à λ/8, qui subdivise la première structure de ligne (2) en deux sections situées l'une derrière l'autre dans la direction axiale et qui forme la base, chacune des deux sections étant affectée respectivement à un des deux contacts (24 ; 25) et λ étant la longueur d'onde affectée à une fréquence souhaitée dans la plage des très hautes fréquences.

32. Récepteur selon la revendication 31, **caractérisé en ce que** le vide (6) est aménagé au centre de la première structure de ligne (2).

33. Récepteur selon l'une quelconque des revendications 21 à 32, **caractérisé en ce que** la forme de la au moins une seconde structure de ligne (22, 22a, 22c, 22f) ne diffère que par la base manquante de la forme de la première structure de ligne (2),
**en ce que** la première structure de ligne (2) et la au moins une seconde structure de ligne (22, 22a 22c, 22f) sont disposées l'une à côté de l'autre, et
**en ce que** les directions axiales des structures de ligne adjacentes incluent un angle (α) inférieur à 70 degrés, sont de préférence parallèles.

34. Récepteur selon l'une quelconque des revendications 21 à 33, **caractérisé en ce que** les structures de ligne présentent respectivement un axe longitudinal et les écarts des axes longitudinaux entre des structures de ligne immédiatement adjacentes sont respectivement inférieurs à 0,5 mm, de préférence inférieurs à 0,1 mm.

35. Récepteur selon la revendication 33, **caractérisé en ce que** la première structure de ligne (2, 2a, 2b) et la au moins une seconde structure de ligne (22, 22a, 22b, 22d, 22e, 22g) présentent une forme allongée et **en ce que** leur longueur est inférieure à 3 mm,
**en ce que** l'on aménage n secondes structures de ligne (22) sur l'une des faces de la première structure de ligne (2) et m secondes structures de ligne (22) sur l'autre face de la première structure de ligne (2), au moins une des valeurs n et m étant supérieure ou égale à 1,
**en ce que** les secondes structures de ligne (22) immédiatement adjacentes à la première structure de ligne (2) sont, à leurs deux extrémités, couplées respectivement à l'extrémité correspondante de la première structure de ligne (2), et
**en ce que** les autres secondes structures de ligne (22) sont, à leurs deux extrémités, couplées respectivement à l'extrémité correspondante de la seconde structure de ligne (22) immédiatement adjacente dans la direction de la première structure de ligne (2).

36. Récepteur selon la revendication 33, **caractérisé en ce que** la première structure de ligne (2, 2a, 2b) et la au moins une seconde structure de ligne (22, 22a, 22b, 22d, 22e, 22g) présentent une forme allongée et **en ce que** leur longueur est inférieure à 3 mm,
**en ce que** l'on aménage n secondes structures de ligne (22a) sur l'une des faces de la première structure de ligne (2) et m secondes structures de ligne (22a) sur l'autre face de la première structure de ligne (2), au moins une des valeurs n et m étant supérieure ou égale à 1,
**en ce que** l'une des extrémités de la première structure de ligne (2) est couplée à l'extrémité correspondante de la seconde structure de ligne (22a) immédiatement adjacente à l'une des faces de la première structure de ligne,
**en ce que** l'autre extrémité de la première structure de ligne (2) est couplée à l'extrémité correspondante de la seconde structure de ligne (22a) immédiatement adjacente à l'autre face de la première structure de ligne (2),
**en ce que** l'extrémité, non couplée à la première structure de ligne (2), de la seconde structure de ligne (22a) immédiatement adjacente à la première structure de ligne (2) forme une extrémité de ligne ouverte ou, lorsqu'une autre seconde structure de ligne (22a) est aménagée sur la face de la seconde structure de ligne (22a) opposée à la première structure de ligne (2), **en ce que** l'extrémité, non couplée à la première structure de ligne (2), de la seconde structure de ligne (22a) immédiatement adjacente à la première structure de ligne (2) est couplée à l'extrémité correspondante de cette autre seconde structure de ligne (22a), et
**en ce que**, sur les deux faces de la première structure de ligne (2), les secondes structures de ligne (22a) les plus externes sont couplées à l'une de leurs extrémités respectivement à l'extrémité correspondante de la seconde structure de ligne (22a) immédiatement adjacente dans la direction de la première structure de ligne (2) et **en ce que** leur autre extrémité forme respectivement une extrémité de ligne ouverte, et **en ce que**,
pour autant que d'autres secondes structures de ligne (22a) soient aménagées entre les secondes structures de ligne (22a) les plus externes et les secondes structures de ligne (22a) immédiatement adjacentes à la première structure de ligne (2), celles-ci étant couplées à l'une de leurs extrémités respectivement à l'extrémité correspondante de la seconde structure de ligne (22a) immédiatement adjacente sur l'une des faces et à leur autre extrémité à l'extrémité correspondante de la seconde structure de ligne (22a) immédiatement adjacente à son autre face.

37. Récepteur selon la revendication 35 ou 36, **caractérisé en ce que** les valeurs m et n sont identiques.

38. Récepteur selon l'une quelconque des revendications 21 à 37, **caractérisé en ce que**
des structures de ligne adjacentes (2 ; 22, 22a, 22c) sont couplées via des sections de raccordement de lignes (23, 23a, 23c).

39. Récepteur selon la revendication 38, **caractérisé en ce que** les sections de raccordement de lignes (23, 23a, 23c) sont inférieures à λ/8, de préférence inférieures à λ/10, λ étant la longueur d'onde affectée à une fréquence souhaitée dans la plage de très hautes fréquences.

40. Récepteur selon la revendication 38 ou 39, **caractérisé en ce que** les structures de ligne (2 ; 22, 22a, 22c) s'étendent parallèlement et **en ce que** les sections de raccordement de lignes (23, 23a, 23c) sont aménagées perpendiculairement à celles-ci.

41. Récepteur selon l'une quelconque des revendications 21 à 40, **caractérisé en ce que** le dispositif (11) enregistrant une différence de potentiel est un ampèremètre.

42. Récepteur selon l'une quelconque des revendications 21 à 41, **caractérisé en ce qu'**il est prévu comme source de lumière (14) un laser qui peut générer des impulsions de lumière d'une durée inférieure à 5 picosecondes, de préférence inférieure à 1 picoseconde.
